# EUROPEAN PATENT SPECIFICATION

(11) **EP 1 310 389 B1**
(45) Date of publication and mention of the grant of the patent: **13.04.2005**
(21) Application number: 02023718.6
(22) Date of filing: 23.10.2002
(51) Int. Cl.: B60H 1/00, B60H 1/32

(54) **Air conditioner for vehicle**
Kraftfahrzeugklimaanlage
Climatisation pour véhicule

(30) Priority: 23.10.2001 JP 2001324791; 09.08.2002 JP 2002233436
(43) Date of publication of application: 14.05.2003
(73) Proprietor: Japan Climate Systems Corporation, Higashihiroshima-shi, Hiroshima 739-0153 (JP)
(72) Inventor: Maebo, Tomonori, Higashihiroshima-shi, Hiroshima 739-0153 (JP); Yonehara, Shinji, Higashihiroshima-shi, Hiroshima 739-0153 (JP); Yamamoto, Kazuhiro, Higashihiroshima-shi, Hiroshima 739-0153 (JP); Yamamoto, Tsutomu, Higashihiroshima-shi, Hiroshima 739-0153 (JP); Kuwabara, Takeshi, Higashihiroshima-shi, Hiroshima 739-0153 (JP); Fukuoka, Fuminari, Higashihiroshima-shi, Hiroshima 739-0153 (JP); Hakata, Toshiki, Higashihiroshima-shi, Hiroshima 739-0153 (JP); Okamoto, Tadashi, Higashihiroshima-shi, Hiroshima 739-0153 (JP)
(74) Representative: Laufhütte, Dieter, Dr.-Ing.

(56) References cited:
- WO-A-01/74615
- PATENT ABSTRACTS OF JAPAN vol. 2000, no. 04, 31 August 2000 (2000-08-31) & JP 2000 025447 A (DENSO CORP), 25 January 2000 (2000-01-25)
- PATENT ABSTRACTS OF JAPAN vol. 1998, no. 14, 31 December 1998 (1998-12-31) & JP 10 244820 A (CALSONIC CORP), 14 September 1998 (1998-09-14)

## Description

### BACKGROUND OF THE INVENTION

The present invention relates to an air conditioner for a vehicle, and in particular to a disposition of an expansion valve of a heat exchanger for cooling air disposed in an air conditioning unit.

Conventionally, Japanese Patent Laid-Open Publication No. 2000-25447 discloses one of this kind of air conditioner. The conditioner disclosed in it comprises an air conditioner unit that is disposed substantially at the center of an instrument panel in the vehicle width direction and a blower unit that is disposed at a passenger-seat side. In a case of the air conditioning unit, a heat exchanger for cooling air and a heat exchanger for warming air are disposed. Further, a cooling pipe (refrigerant pipe) is coupled to an evaporator at a side wall of the air conditioning unit which is located at the passenger-seat side. Then, the cooling pipe curves at a right angle and extends forward, and an expansion valve block is disposed between the air conditioning unit and a dash panel of the vehicle.

According to this conventional air conditioner, operation of maintenance or exchange for the expansion valve requires the air conditioning unit to be removed from a vehicle. Therefore, such operations for the expansion valve cannot be conducted with ease.

Further, another air conditioner disclosed in Japanese Patent Laid-Open Publication No. 10-244820 is known. This air conditioner also comprises the air conditioning unit, the blower unit and both heat exchangers for cooling and warming air, which are the same as those described above. In this conventional air conditioner, however, an expansion valve block is disposed at a front wall of the air conditioning unit and fastened to a dash panel of the vehicle.

According to this conventional air conditioner, it is necessary to remove the air conditioning unit from the vehicle for operation of maintenance or exchange for the expansion valve block as well. Therefore, such operations for the expansion valve cannot be conducted with ease either.

In the above prior art noted above, in which an expansion valve block is disposed between an air conditioning unit and a dash panel of the vehicle, while a superior seal can be provided, it is not easy to conduct operations of maintenance or the like.

Further, another air conditioner is known, as disclosed in Japanese Patent Laid-Open Publication No. 2001-150941, in which an expansion valve block is disposed at a side wall of the air conditioning unit directly. This prior art discloses a seal structure for the expansion valve block in which the expansion valve block is partially covered by a rib standing up from a case without conventional rubber packing provided entirely around the expansion valve block, and a rest of the portion of the expansion valve block is sealed by a packing. Then, functions for sealing the expansion valve and assembly thereof may be improved.

However, the above prior art shows the expansion valve block that is disposed at the side wall on a blower-unit side, not at the front wall. In this case, it may be difficult to remove only the expansion valve block because a distance between the blower unit and the air conditioning unit is too short. That is, in order to remove the expansion valve block it may be necessary to remove the blower unit to make enough space outside of the wall or to remove the air conditioning unit from a vehicle directly.

In the prior art described above, it is difficult to remove the expansion valve block with ease that is disposed at the front wall or the side wall when conducting operations of its maintenance. That is, removal of only the expansion valve block cannot be done without a removal of the blower unit and the air conditioning unit. The prior art has no particular intention of such operations of maintenance for the expansion valve block.

Further, another prior art is known, as disclosed in Japanese Patent Laid-Open Publication No. 10-81123, in which an air conditioning unit is provided with a cover, and when exchanging an evaporator as a heat exchanger for cooling air, the evaporator is removed by detaching the cover. However, there is no prior art disclosing an expansion valve block disposed at an end of evaporator that discloses specific operations of the expansion valve block, such as, as to where it is disposed, how it is removed.

### SUMMARY OF THE INVENTION

In view of the above-described conventional problems, it is an object of the present invention to provide an air conditioner for a vehicle capable of removing and installing only an expansion valve block without removing a blower unit and an air conditioning unit from the vehicle, in which the expansion valve block is disposed at a wall of an air conditioning case of an air conditioning unit and is coupled to a heat exchange for cooling air.

Further, it is another object of the present invention to provide an air conditioner capable of installing and removing a cover enclosing an expansion valve with ease in order to remove and install only the expansion valve with ease.

Further, it is another object of the present invention to provide an air conditioner capable of operating maintenance of the expansion valve block that is disposed at a driver-side of a side wall with ease, by means of enabling the above-described cover to be installed and removed within in a limited space.

Further, it is another object of the present invention to provide an air conditioner capable of loosening a fixation of a cooling pipe to its supporting bracket with ease in order to remove and install only the expansion valve block with ease, resulting in easy removal and installment of the expansion valve block without removing the cooling pipe from the supporting bracket.

Further, it is another object of the present invention to provide an air conditioner capable of operating removal/installment works of a heat exchanger for cooling air from a passenger-seat side of air conditioning case with ease, after disconnecting an expansion valve block and the heat exchanger for cooling air from a driver-seat side and letting the heat exchanger free against a driver-side wall of the case.

In order to achieve the above object, the present invention provides air conditioner for a vehicle comprising an air conditioning unit disposed substantially at the center of an instrument panel of the vehicle, a blower unit disposed at passenger-seat side of the air conditioning unit and coupled to the air conditioning unit, a heat exchanger for cooling air and a heat exchanger for warming air that are disposed in an air conditioning case of the air conditioning unit, wherein air introduced into the air conditioning unit from the blower unit is conditioned thorough the heat exchanger for cooling air and the heat exchanger for warming air, and an expansion valve block connected to the heat exchanger for cooling air and coupled to a refrigerant pipe, wherein the expansion valve block is disposed at a side wall of the air conditioning case that is located at driver-seat side.

According to the air conditioner for a vehicle of the present invention, the expansion valve block can be removed from the driver-seat side by disconnecting the expansion valve block and the connecting block. In this case, while generally a clutch pedal is disposed at driver-seat side of the vehicle, the expansion valve block with its small size can be removed with ease.

Further, it is preferred that the present invention provides air conditioner further comprising, a connecting block connecting an inlet/outlet for refrigerant provided at the heat exchanger for cooling air and the expansion valve block, the connecting block disposed at a side of the heat exchanger for cooling air that is located at driver-seat side in such a manner that the connecting block faces to outside from said side wall of the air conditioning case that is located at driver-seat side, wherein the expansion valve block is connected to the connecting block in such a manner that at least a part of the expansion valve block is projected from the side wall of the air conditioning case that is located at driver-seat side.

According to this preferred air conditioner for a vehicle of the present invention, if the expansion valve block is fastened to the connecting block by bolts or the like, an installment or removal of the expansion valve block can be achieved with ease just by releasing bolts without removing the air conditioning unit from the vehicle body (instrument panel).

Further, it is preferred that the present invention provides air conditioner comprising, an air conditioning unit disposed substantially at the center of an instrument panel, a heat exchanger for cooling air and a heat exchanger for warming air that are disposed in an air conditioning case of the conditioning unit, wherein air introduced into the air conditioning unit is conditioned thorough the heat exchanger for cooling air and the heat exchanger for warming air, an expansion valve block connected to the heat exchanger for cooling air and coupled to a refrigerant pipe, wherein the expansion valve block is disposed at a side wall of said air conditioning case, and a cover enclosing the expansion valve block with its peripheral wall portion and cover portion, wherein the cover is provided with an opening , through which the refrigerant pipe passes, the cover is formed of two parts that are split at a portion of said opening into a first cover and a second cover, and the peripheral wall portion of the cover is attached to the air conditioning case detachably.

According to this preferred air conditioner for a vehicle of the present invention, the expansion valve can be exposed by removing the second cover resulting in an easy installment/removal of the expansion valve block within a small space.

Further, it is preferred that the present invention provides air conditioner of the above, wherein the expansion valve block is disposed at a side wall of the air conditioning case that is located at driver-seat side.

According to this preferred air conditioner for a vehicle of the present invention, while generally a clutch pedal is disposed at driver-seat side of the vehicle, the expansion valve block can be removed with ease by removing the second cover with a little movement thereof.

Further, it is preferred that the present invention provides air conditioner of the above, wherein the opening is formed on upper surface of the cover, the refrigerant pipe passes through the opening and extends along the side wall of the air conditioning case toward a front end portion thereof, the cover is formed of two parts that are split at a portion of the opening into a first cover and a second cover, and the first cover is located at the air conditioning case side and the second cover located at its opposite side includes the cover portion integrated thereto.

According to this preferred air conditioner for a vehicle of the present invention, the second cover can be moved away from the air conditioning case without contacting the refrigerant pipe resulting in easy removal of the second cover.

Further, it is preferred that the present invention provides air conditioner of the above, wherein the opening is formed at the cover portion, the refrigerant pipe passes through the opening and extends along the side wall of the air conditioning case toward a front end portion thereof, the cover is formed of two parts that are split at a portion of the opening into a first cover and a second cover, the first cover is located at upper side of the air conditioning case and the second cover is located at its lower side.

According to this preferred air conditioner for a vehicle of the present invention, a state where a lower part of the expansion valve block and the refrigerant pipe are movable can be achieved by removing the lower second cover resulting in easy maintenance operation of the expansion valve block.

Further, it is preferred that the present invention provides air conditioner of the above, wherein the side wall of the air conditioning case is provided with an opening for the extension valve, and an inside end portion of the peripheral wall portion of the cover includes an attaching portion for attaching the peripheral wall portion to the air conditioning case, and the attaching portion includes a projection inserted in the opening for the extension valve and a flange contacting around peripheral edge of the opening.

According to this preferred air conditioner for a vehicle of the present invention, the cover can be installed to or removed from the air conditioning case easily and securely without any leakage of air from the air conditioning case.

Further, it is preferred that the present invention provides air conditioner of the above, wherein a groove is provided at either one of the first cover and second cover at their connecting surface, a rib inserted into the groove is provided at the other one of the first cover and second cover, and the second cover is moved away from the air conditioning case resulting in a disconnection of the first cover and the second cover.

According to this preferred air conditioner for a vehicle of the present invention, connection and disconnection of the first and second covers can be achieved with ease, respectively.

Further, it is preferred that the present invention provides air conditioner of the above, wherein the side wall of the air conditioning case is provided with an opening for the extension valve, the first cover of the cover includes a first peripheral wall enclosing around the opening for the expansion valve that is formed at the air conditioning case, the second cover includes a second peripheral wall having an inside end portion thereof that attaches to an outside end portion of the first peripheral wall of the first cover, and the second cover includes the cover portion integrated thereto.

According to this preferred air conditioner for a vehicle of the present invention, a secure connection of the air conditioning case and the first peripheral wall can be achieved.

Further, it is preferred that the present invention provides air conditioner of the above, further comprising a hook connecting the first cover and the second cover.

According to this preferred air conditioner for a vehicle of the present invention, a secure connection of the first and the second covers can be achieved, and also an easy removal of the first cover from the second cover can be achieved by loosening the hook.

Further, it is preferred that the present invention provides air conditioner of the above, wherein the first cover of the cover is formed of a plate member located at a side of the air conditioning case from said opening of the cover, the second cover of the cover encloses lower, both sides and upper surfaces of the expansion valve block and covers outside of the opening, a rib is provided at either one of both side ends of said plate and an end of the second cover connected to the both side ends of the plate, a groove receiving the rib is provided at the other one of the both side ends of said plate and the end of the second cover, the second cover is slid away from the air conditioning case resulting in releasing a connection of the groove and the rib.

According to this preferred air conditioner for a vehicle of the present invention, a removal of the second cover makes a state where the expansion valve block and the refrigerant pipe are exposed fully resulting in an easy installment/removal of the expansion valve block within a small pace.

Further, it is preferred that the present invention provides air conditioner of the above, wherein the groove is provided with a loose portion, the second cover is moved away from the air conditioning until where said rib comes at a position of the loose portion resulting in releasing a connection of the groove and the rib.

According to this preferred air conditioner for a vehicle of the present invention, a disconnection of the second cover can be achieved by just sliding it slightly resulting in a removal of the second cover within a small space.

Further, it is preferred that the present invention provides air conditioner comprising, an air conditioning unit disposed substantially at the center of an instrument panel, a heat exchanger for cooling air and a heat exchanger for warming air that are disposed in an air conditioning case of the conditioning unit, wherein air introduced into the air conditioning unit is conditioned thorough the heat exchanger for cooling air and the heat exchanger for warming air, an expansion valve block connected to the heat exchanger for cooling air and coupled to a refrigerant pipe, wherein the expansion valve block is disposed at a side wall of the air conditioning case, and an opening for installing the heat exchanger for cooling air into the air conditioning case or removing the heat exchanger for cooling air out of the air conditioning case, wherein the opening is formed at a side wall of the air conditioning case that is located at opposite side to the side wall of the air conditioning case for the expansion valve block.

According to this preferred air conditioner for a vehicle of the present invention, the expansion valve block can be removed with ease without removing the air conditioning case from the vehicle or disassembling the air conditioning case, resulting in an easy maintenance operation of the expansion valve block. Further, the removal of the expansion valve block can release a connection between the heat exchanger for cooling air and the expansion valve block, that is, between the heat exchanger for cooling air and the refrigerant pipe, resulting in an easy removal of the heat exchanger for cooling air from the side wall that is located at an opposite side.

Further, it is preferred that the present invention provides air conditioner of the above, wherein the opening for installing the heat exchanger for cooling air is disposed at a side wall of the air conditioning case that is located at passenger-seat side, and the expansion valve block is disposed at a side wall of said air conditioning case that is located at driver-seat side.

According to this preferred air conditioner for a vehicle of the present invention, a removal of the blower unit and disconnection between the expansion valve and the connecting unit can make a state where the heat exchanger for cooling air is pulled toward the passenger-seat side. Especially, providing a separate cover for the opening for installing the heat exchanger for cooling air can make the heat exchanger for cooling air to be taken out without a disassembly of the air conditioning case by just removing the separate cover, resulting in an easy maintenance/exchange operations of the heat exchanger for cooling air.

Further, it is preferred that the present invention provides air conditioner of the above, wherein the refrigerant pipe extends along the side wall of the air conditioning case toward a front end portion thereof, and a bracket supporting the refrigerant pipe is attached to a front end portion of the air conditioning case.

According to this preferred air conditioner for a vehicle of the present invention, the refrigerant pipe can be supported easily and securely.

Further, it is preferred that the present invention provides air conditioner of the above, wherein the refrigerant pipe extends along the side wall of the air conditioning case toward a front end portion thereof, a bracket supporting the refrigerant pipe is attached to a front end portion of the air conditioning case, the bracket is provided with an opening for supporting the refrigerant pipe and is formed in such a manner that the bracket is split at a center portion of the opening into two parts, and one of said bracket is integrated to the air conditioning unit and the other bracket is attached to the air conditioning unit detachably.

According to this preferred air conditioner for a vehicle of the present invention, the refrigerant pipe can be supported easily and securely at one action.

Further, it is preferred that the present invention provides air conditioner of the above, wherein the refrigerant pipe extends along the side wall of the air conditioning case toward a front end portion thereof, a bracket supporting the refrigerant pipe is attached to a front end portion of the air conditioning case, the bracket is provided with an opening for supporting the refrigerant pipe, the opening has a bigger bore than an external diameter of the refrigerant pipe, and a detachable seal plate is disposed at the bracket to hold the refrigerant pipe against the bracket.

According to this preferred air conditioner for a vehicle of the present invention, the refrigerant pipe can be loose against the supporting bracket by removing the seal plate and then the expansion valve block can be moved easily by disconnecting the expansion valve block and the connecting block, resulting in an easy removal of the expansion valve block.

Further, it is preferred that the present invention provides air conditioner of the above, wherein the refrigerant pipe extends along the side wall of the air conditioning case toward a front end portion thereof, a bracket supporting the refrigerant pipe is attached to a front end portion of the air conditioning case, the bracket is provided with an opening for supporting the refrigerant pipe and is formed in such a manner that the bracket is split at a center portion of the opening into two parts, one of said bracket is integrated to the air conditioning unit and the other bracket is attached to the air conditioning unit detachably, the opening has a bigger bore than an external diameter of the refrigerant pipe, and a detachable seal plate is disposed at the bracket to hold the refrigerant pipe against the bracket.

According to this preferred air conditioner for a vehicle of the present invention, the refrigerant pipe can be loose against the supporting bracket by removing the seal plate and then the expansion valve block can be moved easily by disconnecting the expansion valve block and the connecting block, resulting in an easy removal of the expansion valve block.

Further, it is preferred that the present invention provides air conditioner of the above, wherein the refrigerant pipe extends along the side wall of the air conditioning case toward a front end portion thereof, a bracket supporting the refrigerant pipe is attached to a front end portion of the air conditioning case, the bracket is provided with an opening for supporting the refrigerant pipe, the opening has a bigger bore than an external diameter of the refrigerant pipe, a detachable seal plate is disposed at the bracket to support the refrigerant pipe against the bracket, the seal plate is provided with a recess having a diameter equivalent to an external diameter of the refrigerant pipe, and the seal plate is disposed detachably so that it can move in a perpendicular direction to an extending direction of the refrigerant pipe.

According to this preferred air conditioner for a vehicle of the present invention, the seal plate can be installed and removed with ease, and a secure support of the refrigerant pipe by the seal plate can be achieved.

Further, it is preferred that the present invention provides air conditioner of the above, wherein the refrigerant pipe extends along the side wall of the air conditioning case toward a front end portion thereof, a bracket supporting the refrigerant pipe is attached to a front end portion of the air conditioning case, the bracket is provided with an opening for supporting the refrigerant pipe and is formed in such a manner that the bracket is split at a center portion of the opening into two parts, one of said bracket is integrated to the air conditioning unit and the other bracket is attached to the air conditioning unit detachably, the opening has a bigger bore than an external diameter of the refrigerant pipe, and a detachable seal plate is disposed at the bracket to hold the refrigerant pipe against the bracket, the seal plate is provided with a recess having a diameter equivalent to an external diameter of the refrigerant pipe, and the seal plate is disposed detachably so that it can move in a perpendicular direction to an extending direction of the refrigerant pipe.

According to this preferred air conditioner for a vehicle of the present invention, the seal plate can be installed and removed with ease, and a secure support of the refrigerant pipe by the seal plate can be achieved.

Further, it is preferred that the present invention provides air conditioner of the above, wherein an inlet/outlet of the heat exchanger for warming air is disposed at the side wall of the air conditioning case that is located at driver-seat side.

According to this preferred air conditioner for a vehicle of the present invention, piping layout can be easy because a heating pipe is located at the same side as the refrigerant pipe. Further, the heating pipe does not prevent the heat exchanger for cooling air from being installed or removed, and the heating pipe need not turn around for the heat exchanger for cooling air. Therefore, the heating pipe maintains highly flexible layout and can extend forward of the air conditioning unit with a short cut.

Further, it is preferred that the present invention provides air conditioner of the above, wherein the heat exchanger for cooling air is disposed extending in substantially a perpendicular direction, air introduced into the air conditioning unit flows through the heat exchanger for cooling air from a front side to a rear side of the vehicle, and the heat exchanger for warming air is disposed at a rear side of the vehicle to the heat exchanger for cooling air.

According to this preferred air conditioner for a vehicle of the present invention, the air conditioning unit can be made compact in the vehicle length direction.

Further, it is preferred that the present invention provides air conditioner of the above, wherein the heat exchanger for cooling air is disposed extending in substantially a perpendicular direction, air introduced into the air conditioning unit flows through the heat exchanger for cooling air from a front side to a rear side of the vehicle, the heat exchanger for warming air is disposed at a rear side of the vehicle to the heat exchanger for cooling air, the heat exchanger for warming air is inclined in such a manner that its lower end approaches to the heat exchanger for cooling air while its upper end is away from the heat exchanger for cooling air, the air flowing through the heat exchanger for cooling air goes upward through the heat exchanger for warming air, and a mixing space with a bypass air is disposed at an upper position of the heat exchanger for warming air.

According to this preferred air conditioner for a vehicle of the present invention, the air conditioning unit can be made further compact.

Further, it is preferred that the present invention provides air conditioner of the above, wherein the heat exchanger for cooling air is disposed extending in substantially a perpendicular direction, air introduced into the air conditioning unit flows through the heat exchanger for cooling air from a front side to a rear side of the vehicle, the heat exchanger for warming air is disposed at a rear side of the vehicle to the heat exchanger for cooling air, and an inlet/outlet of the heat exchanger for cooling air and an inlet/outlet of the heat exchanger for warming air are respectively disposed at the side wall of the air conditioning case that is located at driver-seat side.

According to this preferred air conditioner for a vehicle of the present invention, piping layout can be easy, and the air conditioning unit can be made compact in the vehicle length direction.

### BRIEF DESCRIPTION OF THE DRAWINGS

FIG. **1** is a perspective view showing a state where an air conditioner is installed in a vehicle in the first embodiment of the present invention.
FIG. **2** is a perspective view seeing from the right-rear showing an exploded state of an air conditioning unit, a blower unit and an outside air induction passage of the above air conditioner.
FIG. **3** is a right-side view of the above air conditioning unit.
FIG. **4** is a left-side view of the above air conditioning unit.
FIG. **5A** is a perspective view of an evaporator disposed in the above air conditioning unit, and FIG. **5B** is a sectional view of the evaporator.
FIG. **6** shows a state of installment of a cooling pipe (refrigerant pipe) to the above air conditioning unit.
FIG. **7** is a partially enlarged view of FIG. **6**.
FIG. **8** shows a part of a right-side wall of the above air conditioning unit where an expansion valve block and a connecting block are disposed.
FIG. **9** shows a state where the evaporator is taken out of the above air conditioning unit.
FIG. **10A** is a partially enlarged view of a portion A of FIG. **9,** FIG. **10B** is a sectional view taken on line I-I of FIG. **10A,** and FIG. **10C** is a sectional view taken on line II-II of FIG. **10B**.
FIG. **11** is a sectional view of the above air conditioning unit.
FIG. **12** is a view that is equivalent to FIG. **6** in the second embodiment of the present invention.
FIG. **13** is a view that is equivalent to FIG. **6** in the third embodiment of the present invention.
FIG. **14** is a partially enlarged view of FIG. **13**.
FIG. **15** is a perspective view showing a state where an expansion valve block, a cooling pipe (refrigerant pipe) and a cover are exploded in the third embodiment.
FIG. **16** is a sectional view showing a state where the expansion valve block, the cooling pipe (refrigerant pipe) and the cover are assembled in the third embodiment.
FIG. **17** is a sectional view showing a state where a first cover and a second cover are connected in the third embodiment.
FIG. **18** is a perspective view showing a state where the above covers are connected in the third embodiment.
FIG. **19** is a perspective view showing a state where the above covers are disconnected in the third embodiment.
FIG. **20** is a view that is equivalent to FIG. **15** in the fourth embodiment of the present invention.
FIG. **21** is a perspective view showing a state where covers are connected in the fourth embodiment.
FIG. **22** is a view that is equivalent to FIG. **16** in the fourth embodiment.
FIG. **23** is a view that is equivalent to FIG. **15** in the fifth embodiment of the present invention.
FIG. **24** is a perspective view showing a state where covers are connected in the fifth embodiment.
FIG. **25** is a partially enlarged view of FIG. **24**.
FIG. **26** is a partially enlarged view of another part of FIG **24**.

### DETAILED DESCRIPTION OF THE INVENTION

Preferred embodiments of the present invention will be described hereinafter referring to drawings.

### EMBODIMENT 1

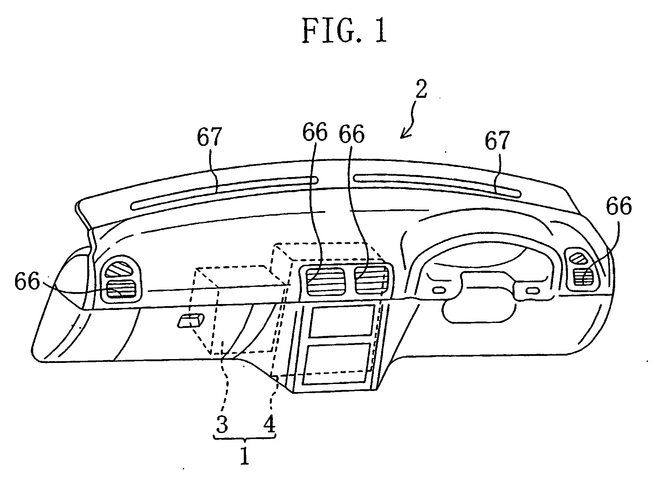

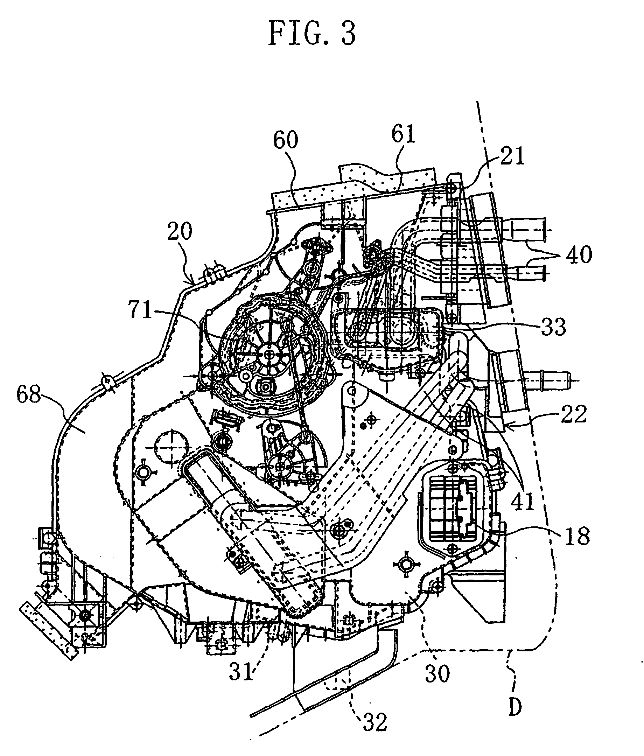

FIG. **1** shows an air conditioner of the present invention disposed in an automotive vehicle. An air conditioner **1** is placed in an instrument panel **2** provided in a vehicle compartment. The vehicle described herein is a so-called right-handle vehicle, which has a driver's seat at a right side and a passenger's seat at a left side of the vehicle, respectively. A front-located engine room is partitioned from a vehicle compartment by a dash panel **D** (only shown in FIG. **3**). In embodiments of the present invention, a front vehicle side and a rear vehicle side of the air conditioner **1** are referred to as a front side and a rear side, respectively.

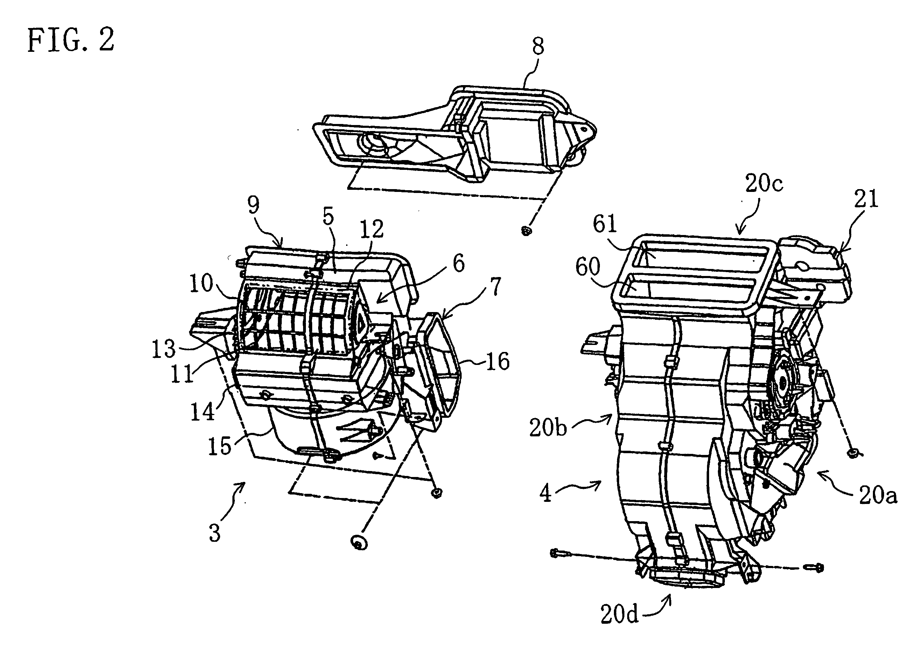

FIG. **2** shows an external view of the air conditioner **1** of the present invention. The air conditioner **1** comprises a blower unit **3** and an air conditioner unit **4** where an air from the blower unit **3** is cooled and supplied to the vehicle compartment after temperature adjustment. The air conditioner unit **4** is, as shown in the FIG. **1**, disposed substantially at the center portion in the vehicle width direction. The blower unit **3** is disposed in front of the passenger's seat near the air conditioner unit **4**. A lower end of the blower unit **3** is positioned over a lower end of the air conditioner unit **4** resulting in a large foot space for a passenger.

The blower unit **3** has a casing **5** that split into two pieces at the center portion thereof in the vehicle width direction, which are integrated by a fastener or the like. The casing **5** has an air intake portion **6** at upper thereof for introducing an air into the air conditioner **1** and an air blowing portion **7** at lower thereof for supplying the introduced air to the air conditioning unit **4**.

The air intake portion **6** is, as shown in FIG. **2**, provided with an outside air introduction port **9** for introducing an outside air of the vehicle through a duct **8** and an inside air introduction port **10** for introducing an inside air in the vehicle compartment at its upper portion, respectively. The outside air introduction port **9** is formed at an upper front portion of the intake portion **6** that includes substantially a rectangular-shaped opening. Meanwhile, an opening is formed at a rear side of the intake portion **6.** The opening with an arc-shape cross section curves forward as it goes up, and this opening constitutes the above inside air introduction port **10**. The inside air introduction port **10** includes a grille **11** integrated therewith.

An inside/outside air switching damper **12** is installed in the above introduction ports **9, 10.** The damper **12** with a shape like a quarter of cylinder comprises a peripheral wall with an arc-shape cross section and both side walls with a fan-shape consisting of a quarter of circle. The damper has a pivot placed at the center of the above side walls to be supported pivotally to the side of the air intake portion **6.** The pivot is coupled to an actuator **13**.

The actuator **13** rotates the damper **12** to form an outside air induction mode where only an outside air is introduced by closing the inside air induction port **10**. Meanwhile, when the damper **12** is rotated in a reverse direction to close the outside air introduction port **9**, an inside air circulation mode is formed where the inside air induction port **10** is fully opened.

Meanwhile, the air intake portion **6** is provided with a filter portion **14** where an air filter is disposed at its lower portion. The filter portion **14** has, not shown, an opening formed on its left side of the vehicle (passenger-seat door side) to exchange filters. Under the filter portion **14**, the air blowing portion **7** is disposed, where a centrifugal multi-fin type of fan **15** is disposed so that its rotational axis extends perpendicularly. Further, a fan motor (not shown) is disposed under the fan **15**.

The air blowing portion **7** is provided with an opening **16** on its left side at the front side. The opening **16** is coupled to an air intake **24** of the air conditioning unit **4** so that an air blowing out of the fan **15** is supplied to the air conditioning unit **4.**

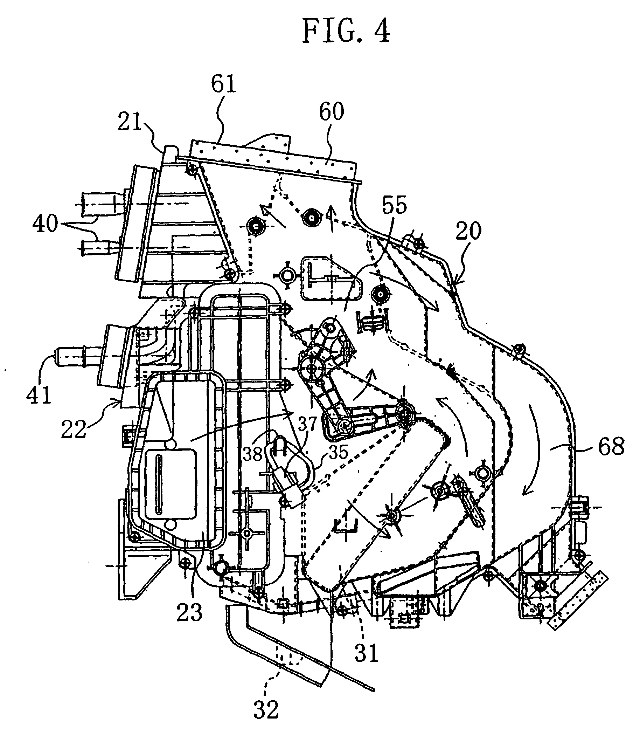

FIG. **3** shows a right side view of the unit **4,** while FIG. **4** shows a left side view of the unit **4.** As shown in these figures, the air conditioning unit **4** comprises an air conditioning case **20** that has a perpendicularly long shape as a whole and also a bigger rectangular box-shape than the case **5** of the blower unit **3**. The case **20** is made of two split pieces, a right-side wall **20a** and a left-side wall **20b**. The left-side wall **20b** is provided with a cover **23**.

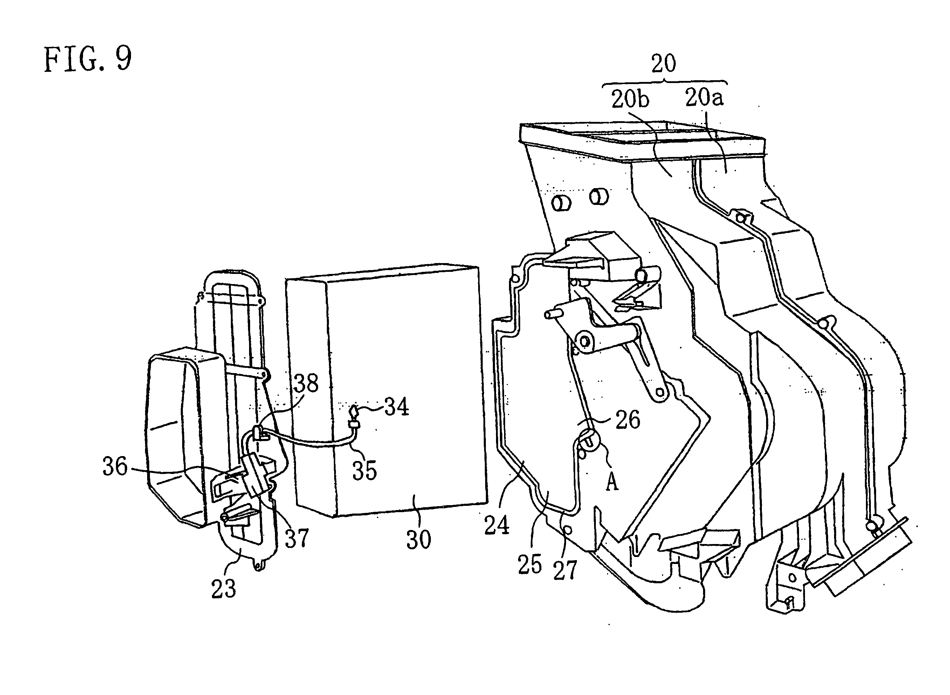

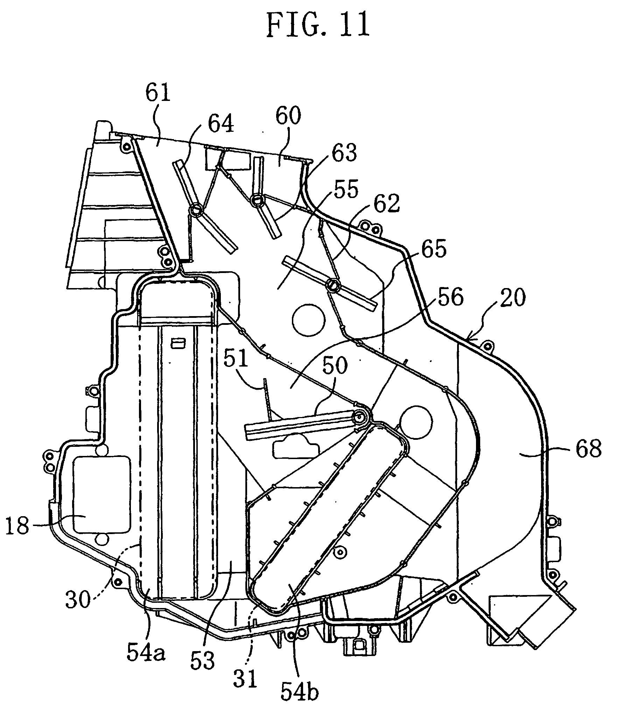

The left-side wall **20b** comprises the air intake **24** (FIG. **9**) formed on the vehicle front side connected to the opening **16** for the air intake portion **6** and an evaporator **30** (FIG. **11**), which is one element of refrigerant cycle, disposed rearward the air intake **24** and extending perpendicularly. Further, a heater core **31** is disposed at the vehicle rear side therein. The heater core **31** is inclined in such a manner that its upper end is positioned rearward while it lower end is positioned forward. The unit **4** has a plurality of air outlets at an upper portion thereof, and the air from the blower unit **3** flows from a forward/rearward direction to a upward direction in the unit **4**, as shown by allows in FIG. **4**.

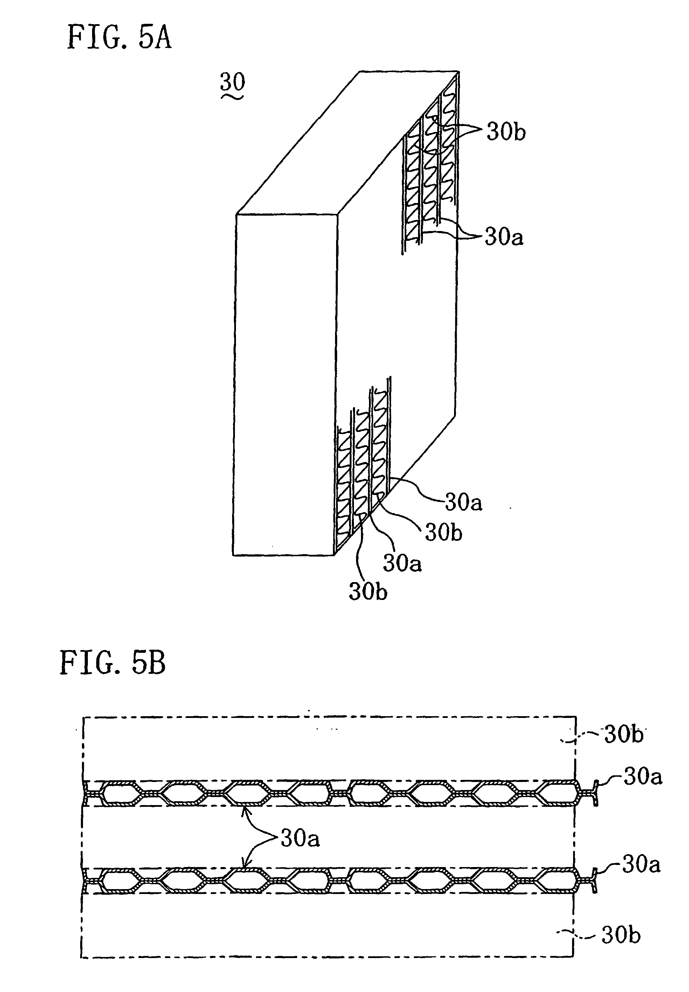

FIG. **5A** shows a perspective view of the evaporator **30,** and FIG. **5B** shows a sectional view of the evaporator **30.** As shown in these figures, the evaporator **30** is a heat exchanger for cooling air from the blower unit **3**, which comprises many laminated flat tube **30a** formed of metal thin plates made of aluminum or the like and wave-shape fin **30b** formed of the same metal connected between the fin **30b.** The flat tube **30a** is formed of a hollow made of two half-split container connected therewith extending perpendicularly. The fin **30b** is formed between the tubes to have a wave-shape section. A rear end of the fin **30b** is preferably positioned inside from the end of the tube **30a.** That is, the rear end of the tube **30a** extends rearward over the rear end of the fin **30b** and, as a result, condensed water-vapor occurred on the surface of the tube **30a** can be guided in such a manner that the water drops along the rear end of the tube **30a**.

Further, since this rear end of the tube **30a** protrudes from the fin **30b,** it may be easy to hold the evaporator **30** and take it out of the case **20** by worker's fingers. The detail of this work will be described in detail later.

Low-temperature refrigerant formed through the refrigerant cycle circulates inside the tube **30b** of the evaporator **30,** and it cools an air flowing through the evaporator **30.** That is, the evaporator **30** is provided with two tanks (not shown) that are disposed at both sides of the tube **30a** and connected to the tubes **30a,** respectively. Refrigerant from one of the tanks flows through the tube **30a** in up/down direction and forward/rearward direction to reach to the other tank, and it flows out of the evaporator **30** finally.

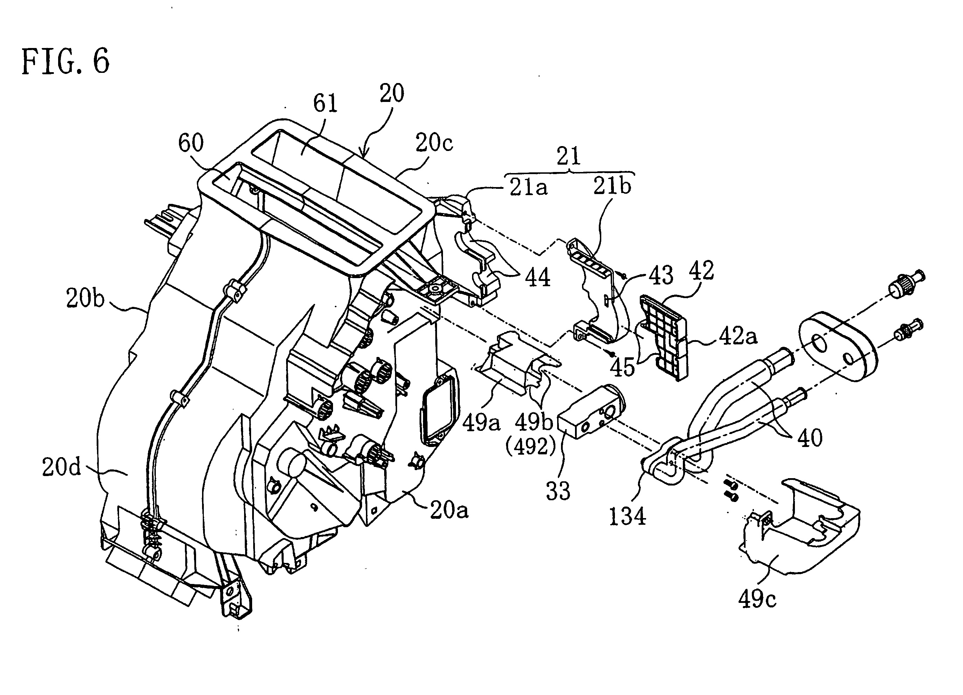

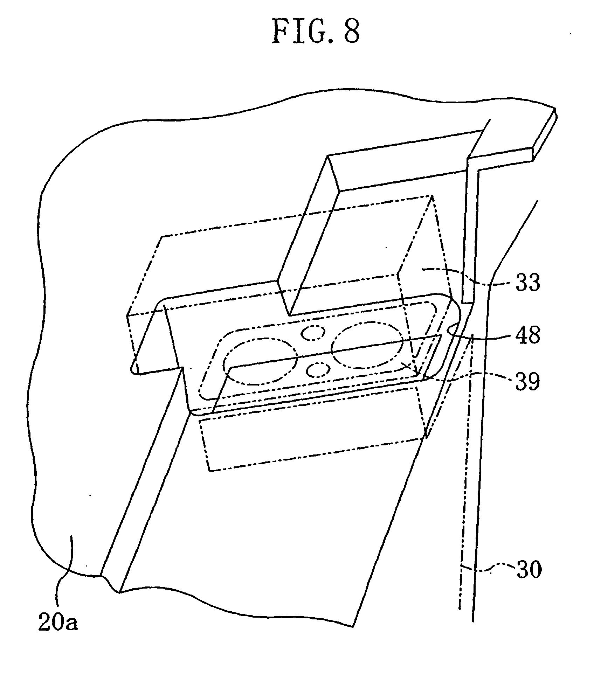

In the present embodiment, flow-in and flow-out tanks of the evaporator **30** are coupled to an expansion valve block **33** (FIGS. **6** and **8**) that is attached to the right-side wall **20a** (a driver-side wall of the air conditioning case **20**) through a connecting block **39** (FIG. **8**) disposed at a right and upper end of the evaporator **30.** Further, a cooling pipe (refrigerant pipe) **40** is coupled to an upper side of the expansion block **33** through the connecting block **39**, and it extends upward and then turns at substantially a right angle forward.

A thermo-sensor **34** is connected detachably through clips or the like to the fin **30b** disposed rearward (air downstream side) of the evaporator **30** (FIG. **9**). A leading wire **35** of the sensor **34** extends outside the air conditioning case **20** to reach to a control box (not shown).

The heater core **31** is a heat exchanger for warming air flowing down through the evaporator **30** and is placed so that it is inclined rearward. The heater core **31** comprises some tubes and fins, like the evaporator **30**, and high-temperature engine coolant of the vehicle circulates in the tubes to warm up air flowing through the heater core **31**.

A heating pipe **41** (FIG. **4**) comprising inlet and outlet pipes for the engine coolant to the heater core **31** is coupled to the heater core **31**. The pipe **41** extends in such a manner that it extends from the right-side wall **20a** toward an outside of the case **20**, then turns at substantially a right angle toward the front, further goes in a transverse direction across a front wall **20c** of the case **20**, and extends further forward at an end portion of the left-side wall **20b.**

The heating pipe **41** is supported by a bracket **22** attached to the front end of the left-side wall **20b** and extends toward the engine room through an opening of the dash panel **D**. When assembling, the opening of the dash panel **D** can be sealed by pushing the bracket **22** against the dash panel **D**, in the same manner as a bracket **21** for supporting the cooling pipe **40**.

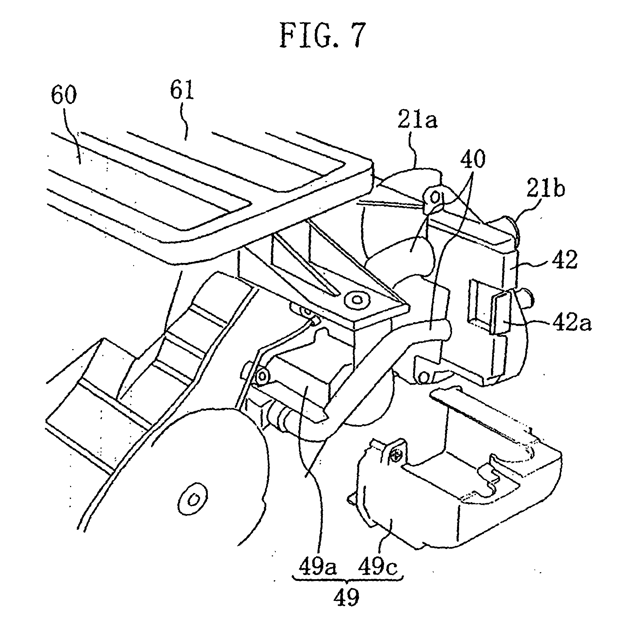

Now, supporting structure of the cooling pipe **40** will be described referring to FIGS. **6** and **7**. FIG. **6** is a perspective view of the air conditioning unit **4** seeing from the right-rear, showing an installment state of the cooling pipe **40**. FIG. **7** is a partial enlarged view of FIG. **6**. The cooling pipe **40** is supported by the bracket **21** attached to a front end of the right-side wall **20a** and extends through the opening of the dash panel **D** toward the engine room. When assembling, the opening of the dash panel **D** is sealed by pushing the bracket **21** against the dash panel **D**.

Specifically, the bracket **21** comprises a fixed bracket portion **21a** integrated to the right-side wall **20a** and a detachable bracket portion **21b**. Each portion **21a, 21b** has a half-split arc opening so that an opening **44** for the cooling pipe **44** disposed side by side in oblique direction can be formed when combining both bracket portions **21a** and **21b.**

The opening **44** has a bigger bore than an external diameter of the cooling pipe **40** and it is formed so that the pipe **40** can be slightly movable even when attaching the detachable bracket portion **21b** by bolts or the like.

Further, a seal plate **42** is disposed at the bracket **21** to support the cooling pipe **40.** The seal plate **42** is provided with a half-cut recess **45** having its diameter that is equivalent to the external diameter of the pipe **40.** The seal plate **42** is guided in a groove formed on the detachable bracket portion **21b** so that it can move in a transverse direction. The cooling pipe **40** can be attached to the bracket **21** by inserting the seal plate **42** into the detachable bracket portion **21b** until a certain position. This inserting enables a projection (not shown) to get into a recess **43** of the detachable bracket portion **21b.** Meanwhile, when taking out the seal plate **42**, the plate **42a** can be slid out easily by releasing connection between the projection and the recess **43.**

The detachable bracket portion **21b** may be attached by a screw with the same fastening direction as that of it when installing the bracket portion **21b**.

Although, in the present embodiment, the seal plate **42** is formed one piece for all cooling pipe **40**, the plate may be arranged for each cooling pipe, separately. Additionally, the pipe **40** may be disposed side by side not only in oblique direction but in perpendicular direction or in transverse direction.

Next, installment of the expansion valve block **33** will be described. Firstly, referring to **8**, installment structure of the expansion valve block **33** to the right-side wall **20a** will be described. The connecting block **39** is attached to a portion at the right-side wall **20a** covering a side of the evaporator **30,** where an inlet/outlet (not shown) of the evaporator **30** is located. A connecting opening **48** is formed at a portion where the connecting block **39** faces on an outside. The expansion valve block **33** is set on an outside of the connecting opening **48**. In this case, the block **33** is bigger than the block **39.** Therefore, a space for installing the expansion valve block **33** is made by providing a recess that is partially formed on an air passage wall for the air conditioning unit **4** in the right-side wall **20a**, that is, a side wall of a mixing space **55** (FIG. **11**) which will be described hereinafter or the like.

The expansion valve block **33** can be installed in a following manner. Firstly, the block **33** is set on the connecting block **39.** A first cover **49a** of a cover **49** is attached over the connecting opening **48.** Then, the block **33** is put on a piping block **134.** The cooling pipe **40** coupled to the piping block **134** is put on a receiving face **49b** of the first cover **49a**. Herein, the receiving face **49b** forms an opening **492**, through which the cooling pipe **40** passes. Then, a second cover **49c** is set to cover over a half of the cooling pipe **40** and to enclose the expansion valve block **33.** And, an end of the second cover **49c** is fastened so as to mach the connecting opening **48.**

Meanwhile, when removing the expansion valve block **33,** the second cover **49c** is unfastened, and the block **33** and the block **134** are disconnected, and then the block **33** and the block **39** are disconnected. As described above, the seal plate **42** should be pulled out to keep the state where the block **33** can be movable a little at any appropriate time. For example, it is before removing the cover **49** or after when the block **33** and the block **134** are disconnected. In this state, the block **33** and the block **39** are disconnected to let the block **33** free entirely. Then, the block **33** is removed for some investigation or exchange thereof.

Covering the expansion valve block **33** by the cover **49** enables the block to be sealed up from the outside with ease without any rubber packing. This is advantageous compared with usage of rubber packing. Because the cover **49** can be used repeatedly and make it easy for a worker to remove or install the block **33** for a maintenance operation or the like without any rubber packing.

Especially, this may be advantageous even in a condition where a clutch pedal is arranged in the vehicle at driver-seat side. Pulling out the seal plate **42** with just one action enables the cooling pipe **40** to be movable. The expansion valve block **33** can be released by removing the cover **49** and by disconnecting the block **33** and the block **39**. These operations can be done with ease without detaching the air conditioning unit **4** from a vehicle even if the vehicle is provided with a clutch pedal.

In the present embodiment, the block **33** and the block **39** are connected and the block **33** and the block **134** are connected, respectively. However, all these blocks **33, 39** and **134** may be connected at the same time by bolts, which has an advantage of one action for assembly/disassembly of three parts.

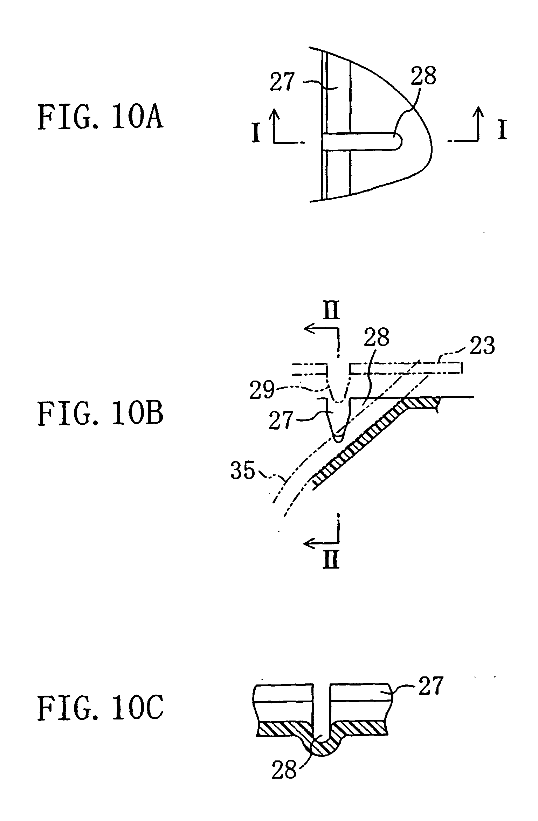

Referring now to FIG. **9** and FIG. **10**, structure of the air conditioning unit **4** accompanying installment of the evaporator **30** is described. FIG. **9** shows a state where the evaporator **30** is taken out of the air conditioning unit **4.** FIG. **10** is a partial enlarged view of a portion **A** of FIG. **9.** FIG. **10B** is a sectional view taken on line I-I of FIG. **10A,** and FIG. **10C** is a sectional view taken on line II-II of FIG. **10B.**

An opening **25** for installing/removing the evaporator **30** is formed at the left-side wall **20b** of the unit **20.** The opening **25** is arranged in such a manner that its upper/lower ends are extends straight along upper/lower ends of the evaporator **30,** and its rear end extends straight from the upper/lower ends toward the center along a rear end of the evaporator **30,** and it is provided with an aperture **26** with substantially a triangle shape at the middle thereof. Meanwhile, a front end of the opening **25** extends straight along a front end of the evaporator **30** and curves forward so that its middle portion encloses the air intake **24** with substantially rectangular shape.

A groove **27** is formed around the opening **25.** The cover **23** has a shape that is equivalent to that of the opening **25** and comprises convex **29** peripherally to be inserted into the groove **27**. An end portion of the groove **27** forming the aperture **26** is provided with a recess **28**. The recess **28** is formed with a slant and deeper bottom than the groove **27** to receive a leading wire **35** of a thermo-sensor **34** in it. That is, the bottom of recess **28** and the convex **29** hold the leading wire **25** between them when the convex **29** of the cover **23** is inserted in the groove **27** of the opening **25**. According to the arrangement, the opening **25** is sealed through the recess **28** and the convex **29** of the cover **23,** and accordingly a periphery of the leading wire **35** is also sealed thorough the recess **28** and the convex **29** resulting in prevention of an air leakage.

The cover **23** is attached to the left-side wall **20b** to cover the opening **25** with a detachable arrangement, such as, by clips, bolts or the like.

A connector **37** of the leading wire **35** is attached with a detachable arrangement to a boss **36** formed integrally on the outer face of the cover **23**. Further, a hook **38** is formed on the outer face of the cover **23** to prevent a dip of the leading wire **35.**

Referring now to FIG. **9**, the detachment of the evaporator **30** will be described. When detaching the evaporator **30**, the expansion valve block **33** on the right-side wall **20a** of the case **20** and the connecting block **39** are disconnected, and the evaporator **30** and the cooling pipe **40** are disconnected. Prior or after this, the cover **23** is detached from the left-side wall **20b.** Then, inserting a thumb of left hand in the aperture **26** and putting other fingers in front of the evaporator **30,** the evaporator **30** may be hold by a left hand. Then, sliding the evaporator **30** out toward the passenger seat at an appropriate timing, the thermo-sensor **34** is detached from the evaporator **30** resulting in an entire isolation of the evaporator **30.** When a dip of the leading wire **35** is necessary during work operation, it may be achieved by detaching the wire **35** from the hook **38**. This may not act an inappropriate stress during detaching the cover **23** on the thermo-sensor **34** and also on an attaching portion of the sensor **34** to the evaporator **30**. Therefore, the fin **30b** and the sensor **34** may not be harmed, and a breaking of the wire **35** can be avoided.

Meanwhile, the sensor **34** may be detached from the evaporator **30** after removing a wire (not the leading wire) connected to the connector **37** or after removing the connector **37** from the boss **36** and disconnecting the cover **23** and the wire **35** to gain a flexibility of the leading wire **35**.

When installing the evaporator, the opposite operations may be followed.

The unit **4** is provided with a drain port **32** at the bottom thereof (FIG. **3** and FIG. **4**), which extends through an opening (not shown) formed on a vehicle body panel to outside of the vehicle. A control circuit **18** (FIG. **3**) for controlling a fan speed is disposed at a position facing to the air intake **24**.

Referring now to FIG. **11** showing a sectional view of the air conditioning unit **4**, an inside of the unit **4** will be described briefly. An air mixing damper **50** (temperature adjusting damper) for adjusting temperature of a mixed air is placed between the evaporator **30** and the heater core **31.** Temperature adjustment by the damper **50** is achieved by controlling a rate of air amount between heated air coming through the heater core **31** and bypass air through a bypass passage **56** going around the heater core **31**.

Specifically, the inside of the air conditioning case **20** of the unit **4** is divided into an evaporator space **54a** and a heater-core space **54b** by a partition **53** integrated to inside of the case **20**. The heater-core space **54b** is connected to the bypass **56** at its downstream portion (upper the heater core **31**) to form the mixing space **55** for controlling mixed air temperature.

The air missing damper **50** is provided with an axis extending in the vehicle width direction and disposed near the heater core **31**. The axis is supported to the case **20** at its both ends. The left end of the axis is coupled to an output of an actuator (not shown) disposed in the right-side wall **20a.** The mixed air adjustment between the heated air coming down to the mixing space **55** through the heater core **31** and the bypass air coming down to the mixing space **55** through the bypass passage **56** is achieved by moving the air mixing damper **50** upward or downward.

A rectifying plate **51** disposed on the damper **50** functions to rectify an air stream and control an air amount.

In the present embodiment, the evaporator **30** and the heater core **31** are located closely to each other to make the air conditioning unit **4** compact. For the purpose of this, the end of the damper **50** moves closely to downstream surface of the evaporator **30**, and a downstream-side ridgeline of the opening **25** is located at a narrow area between the end of the damper **50** and a downstream-side edge of the evaporator **30.** As a result, opening area of the aperture **26** may be limited. However, in the present embodiment, since the aperture **26** needs just opening area that is enough to allow worker's thumb and the thermo-sensor **34** attached on the evaporator **30** to get through, wide opening area is not necessary. Accordingly, it can provide a compact air conditioning unit having close layout of the heater core **31** and the evaporator **30** without preventing movement of the damper **50**.

Further, a vent **60** is formed at an upper side of the air conditioning case **20,** and a defroster vent **61** is formed in front of the vent **60**. These both vents connect to the mixing space **55.** A rear wall **20d** of the case **20** is provided with a foot vent **62** connecting to the mixing space **55**. The vent **60** is connected to vent grilles **66, 66,** - -of the instrument panel **2** (FIG. **1**) through a vent duct (not shown). A conditioned air through the vent **60** flows into toward mainly upper body of passengers in the vehicle. On the other hand, the defrost vent **61** is connected to defrost grilles **67, 67** (FIG. **1**) placed at the front side of the instrument panel **2** through a defrost duct (not shown). A conditioned air through the defrost vent **61** flows toward inside of a windshield of the vehicle. The foot vent **62** is connected to a foot duct **68** extending downward along the rear wall **20d** of the case **20.** The duct **68** opens near foot space for the driver and the passenger to discharge conditioned air toward the foot space. Additionally, conditioned air is also supplied to a rear seat.

Further, in the case **20,** three vent-direction switching dampers **63, 64, 65** are provided that change a direction of the conditioned air by open/close control of the vents **60, 61, 62**. These dampers are adjusted by a linkage mechanism **70** placed at the right-side wall **20a** and an actuator **71** set on a boss of the right-side wall **20a**.

Each damper **63, 64, 65** is driven by the actuator **71** (FIG. **3**) to certain openings in accordance with vent modes. That is, adjustment of these dampers **63, 64, 65** can provide different modes, such as, vent mode, defrost mode, foot mode and by-level mode where air is discharged from both of the vent **60** and foot vent **62**.

In the present embodiment, the air conditioner **1** comprises the opening **16** for the blower unit **3** and the air intake **24** for the unit **4** that are located at front side of the vehicle. Therefore, this can provide a space, that is, a dead space, at rear side of the blower unit **3** and the air conditioning unit **4**. The actuator of the air mixing damper **50** is disposed in the dead space resulting in an achievement of space utility.

### EMBODIMENT 2

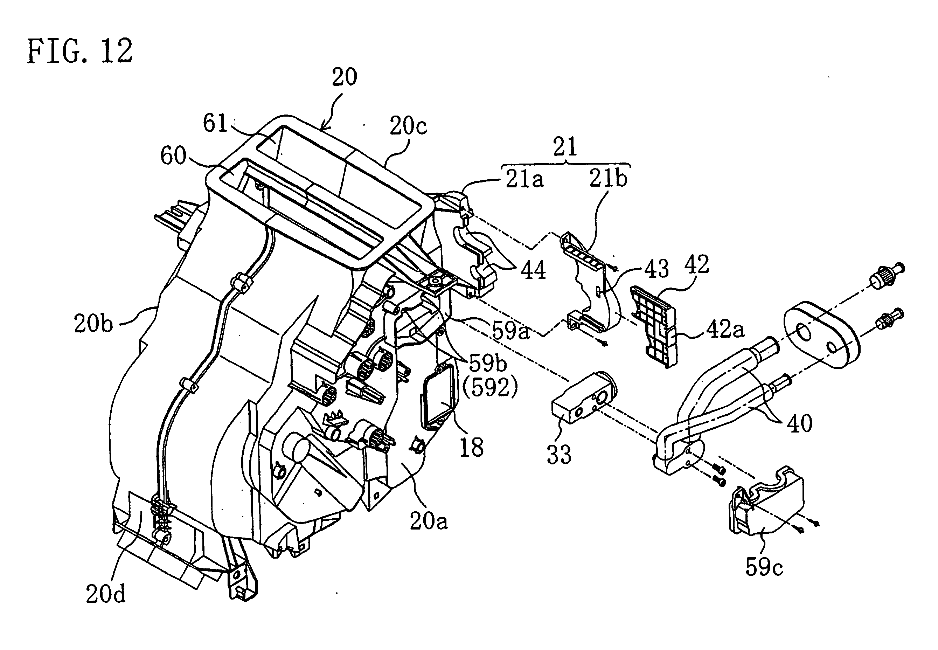

FIG. **12** shows another embodiment of the present invention, which is equivalent to FIG. **6.** Only different portions from FIG. **6** will be described. While the cover **49** comprises the first cover **49a** and the second cover **49c** in FIG. **6**, in the present embodiment a cover **59** comprises a first cover and a second cover. The first cover is formed by a peripheral wall **59a** integrated to the right-side wall **20a** of the air conditioning case **20** so as to enclose the expansion valve block **33.** The peripheral wall **59a** includes a receiving face **59b** to receive the cooling pipe **40.** Herein, the receiving face **59b** forms an opening **592,** through which the cooling pipe **40** passes. Meanwhile, a second cover is formed by a cap **59c** attached to the peripheral wall **59a**, covering half of the cooling pipe **40.** In the present embodiment, since the peripheral wall **59a** and the right-side wall **20a** are integrated, it can reduce the number of parts and assembling labor.

### EMBODIMENT 3

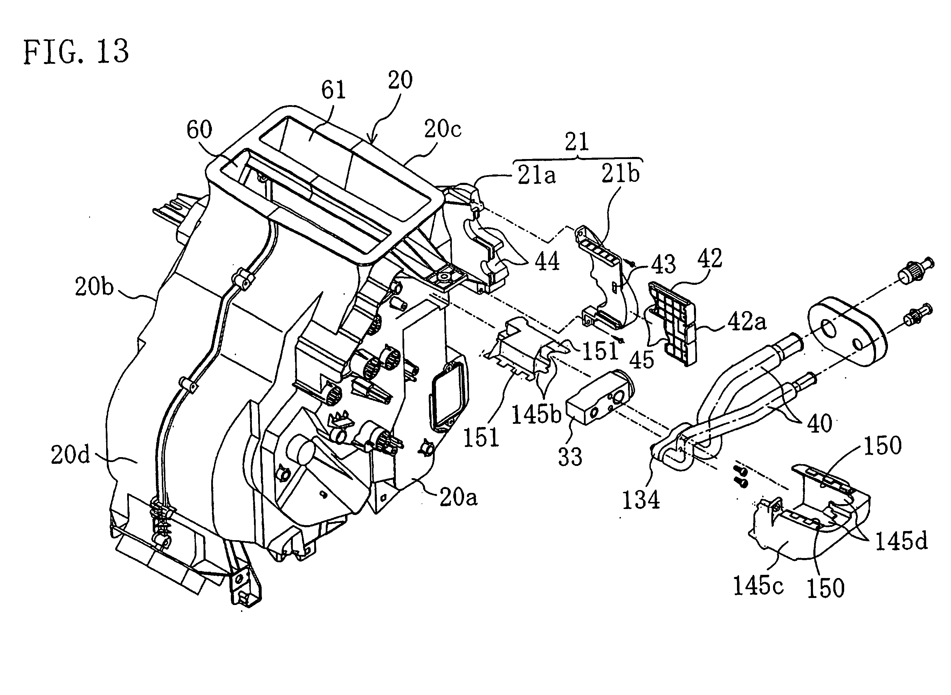

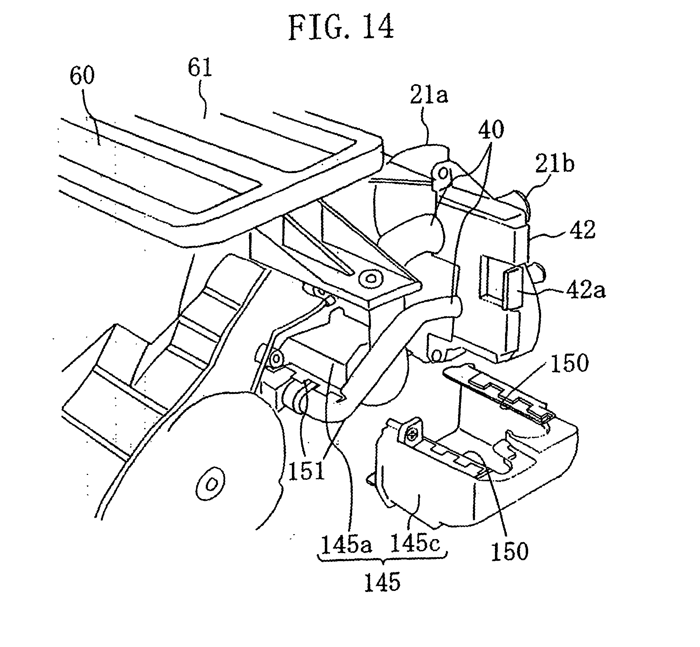

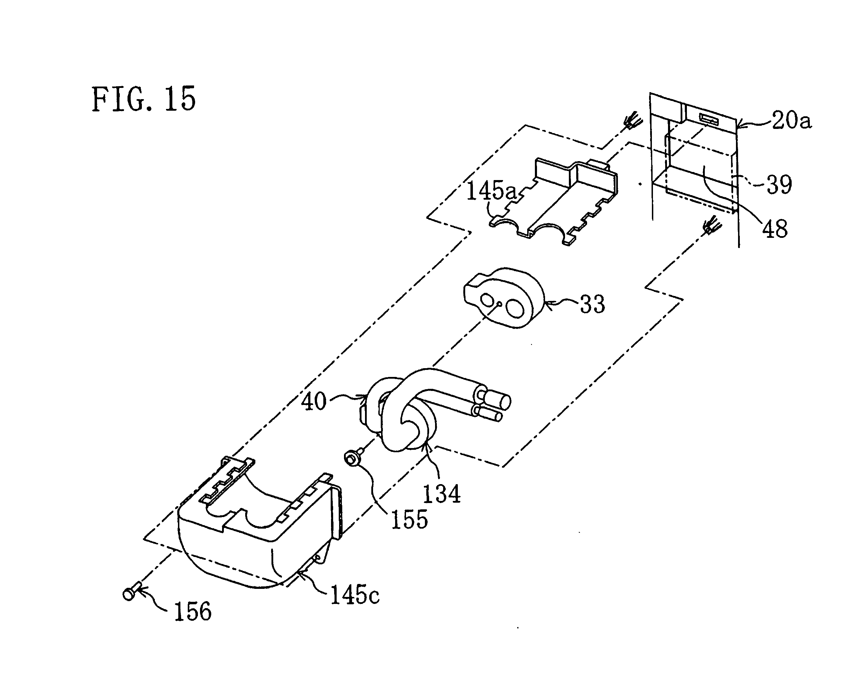

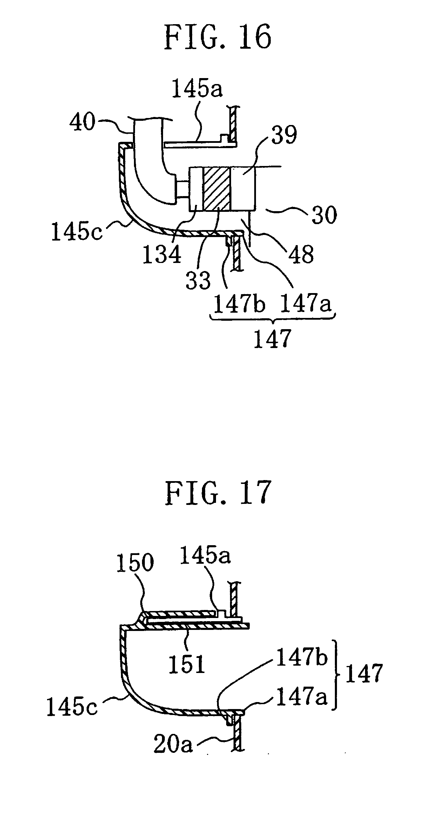

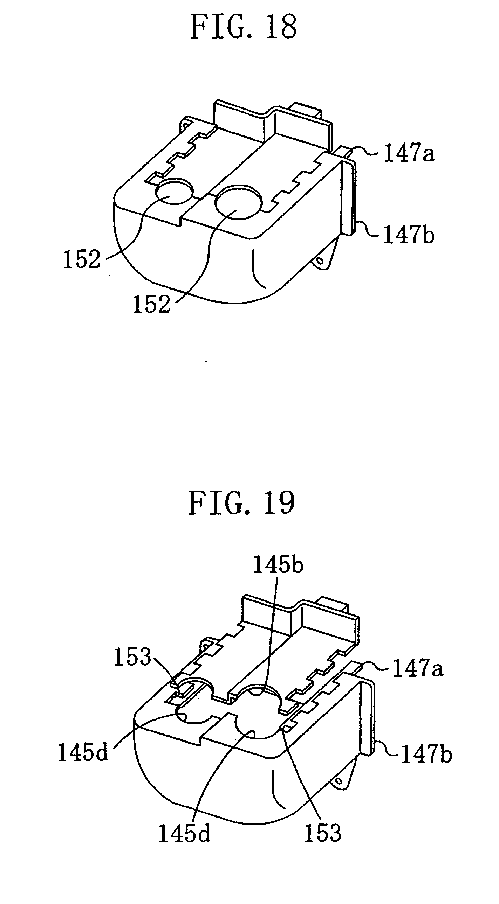

Referring now to FIG. **13** through FIG. **19**, further another embodiment of the present invention will be described. FIG. **13** is a perspective view of the air conditioning unit **4** seeing from the right-rear, which is equivalent to FIG. **6**. FIG. **14** is a partially enlarged view of FIG. **13**. FIG. **15** is an exploded view showing a part for assembling the expansion valve block **33,** and FIG. **16** is a sectional view of assembled parts. FIG. **17** shows a connection state by groove and rib of the first and second covers. FIG. **18** shows a state of connection between the first and second covers. FIG. **19** is a perspective view of the cover, of which the first and second covers are in a separated state.

Detailed description about the same portions as those in the first embodiment will be omitted. The same portions have the same denotations as those in the first embodiment. The connecting block **39** is coupled to the upper of the evaporator **30.** The connecting block **39** is disposed facing to the opening **48** formed on the air conditioning case **20**. The expansion valve block **33** is attached on the connecting block **39**, and the piping block **134** is attached on the expansion valve block **33.** A cover **145** covering the expansion valve block **33** and the piping block **134** comprises a first cover **145a** and a second cover **145c**. A receiving face **145b** of the first cover **145a** and a receiving face **145d** of the second cover **145c** form an opening **152** for the cooling pipe **40.**

Now, assembling state of the expansion valve block **33** is described. Projections of the first cover **145a** are inserted into slits formed over the opening **48**, and then the expansion valve block **33** is fastened to the connecting block **39** by bolts or the like. Further, the piping block **134** is fastened to the block **33** by a bolt **155.** Then, the second cover **145c** is put over the cooling pipe **40**, enclosing the right, left and lower sides of the block **33,** and the cover **145c** is attached in such a manner that its inside end portion **147** fits on the opening **48**. The first cover **145a** and projection **147a** formed at the inside end portion **147** of the first cover **145c** are inserted into the opening **48.** It's a flange **147b** is positioned contacting around peripheral edge of the opening **48**.

The first cover **145a** and the second cover **145c** are connected to each other in such a manner that a rib **151** of the first cover **145a** is inserted into a groove **150** of the second cover **145c.** Specifically, an upper portion of the groove **145a** and the rib **151** are formed in a concavo-convex manner respectively, and the both are connected through them. Finally, the second cover **145c** is fastened to the case **20** by screw **156**.

When removing the block **33**, the screw **156** is unfastened and the second cover **145c** is removed. In this state, the cover **145c** is pulled to a certain position where a recess **153** (loosen portion) of the groove **150** fits to projection of the rib **151** and projection of the groove **150** fits to recess of the rib **151,** respectively. This position allows the both covers **145a** and **145c** to be disconnected. That is, the second cover **145c** can be removed from the first cover **145a** by just putting down the second cover **145c**. Accordingly, the second cover **145c** just needs a short movement stroke for its removal, and this means that the cover **145c** can be assembled and removed within quite narrow space.

After that, the expansion valve block **33** and the piping block **134** are disconnected, and the block **33** and the connecting block **39** are disconnected. The seal plate **42** should be pulled out to keep the state where the piping block **134** and the cooling pipe **40** can be movable a little at any appropriate timing. For example, it is before removing the cover **145** or after when the block **33** and the block **39** are disconnected. Then, the expansion valve block **33** is removed for some investigation or exchange thereof.

As described above, the expansion valve block **33** can be removed for maintenance or the like by removing part of the cover **145**, that is, the second cover **145c.** Especially, this may be advantageous even in a condition where a clutch pedal is arranged in the vehicle at driver-seat side. Pulling out the seal plate **42** with just one action enables the cooling pipe **40** to be movable. The expansion valve block **33** can be released by removing the cover **145** and by disconnecting the block **33** and the block **39.** These operations can be done with ease without detaching the air conditioning unit **4** from a vehicle even if the vehicle is provided with a clutch pedal. In the present embodiment, the second cover **145c** is fastened to the case **20** by the screw **156** resulting in high performance in assembling and supporting the cover.

### EMBODIMENT 4

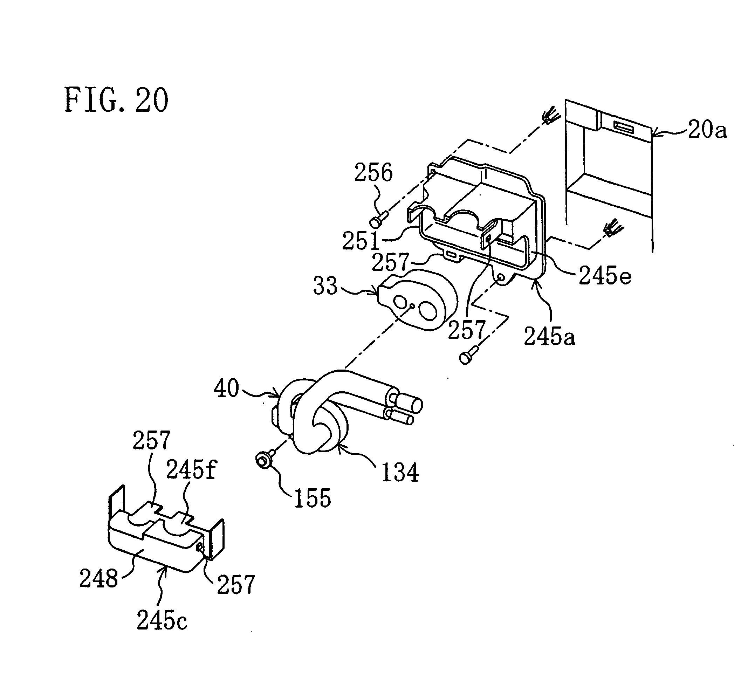

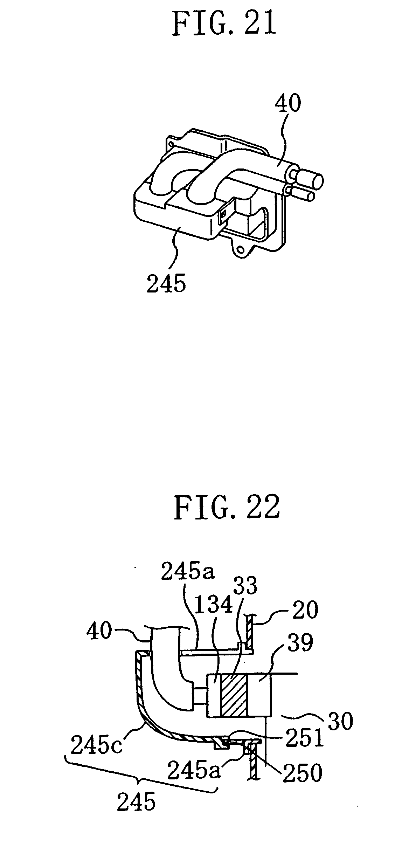

Referring now to FIG. **20** through FIG. **22,** further another embodiment of the present invention will be described. (Only different portions from the third embodiment will be described.) FIG. **20** and FIG. **22** are equivalent to FIG. **15** and FIG. **16** in the third embodiment, respectively. FIG. **21** shows a state where a cover **245** is covered by the expansion valve block **33**.

The cover **245** is different from the cover of the third embodiment in its shape.

Its first cover **245a** comprises a first peripheral wall **245e** that includes a side wall portion enclosing the opening **48** of the case **20** and a side wall covering a part of the cooling pipe **40** where is located at the side of the case **20.** The second cover **245c** comprises a second peripheral wall **245f** covering the rest of part of the side wall and a cover **248.** In the present embodiment, the first cover **245a** is fastened to the case **20** by screw **256.** A rib **251** of the first cover **245a** is inserted into a groove **250** of the second cover **245c.** A hook **257** locks the both covers **245a** and **245c**.

In the present embodiment, unlocking the hook **257** allows the second cover **245c** to be movable to the first cover **245a.** Then, the second cover **245c** can be removed with its just movement of small distance. Accordingly, the present embodiment has an advantage in servicing operations where the second cover **245c** can be attached or removed within a small space and that is done without any specific tools or works.

### EMBODIMENT 5

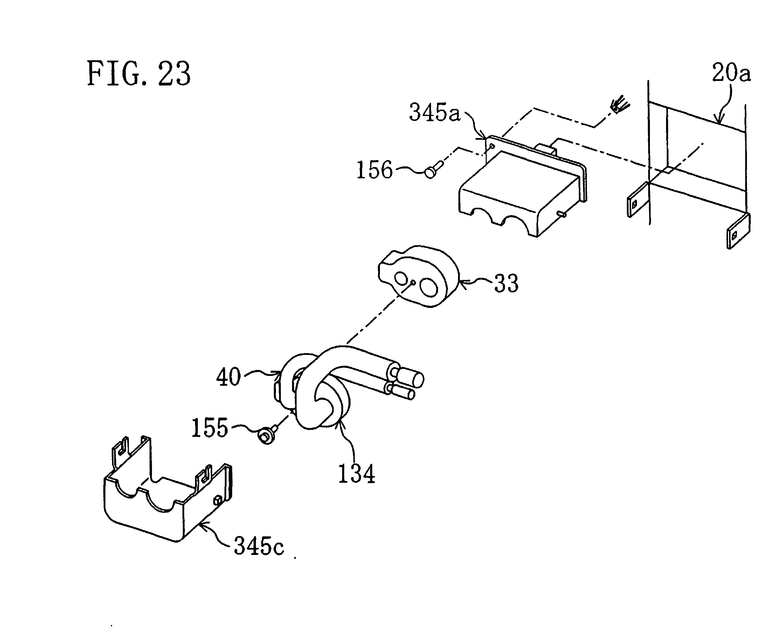

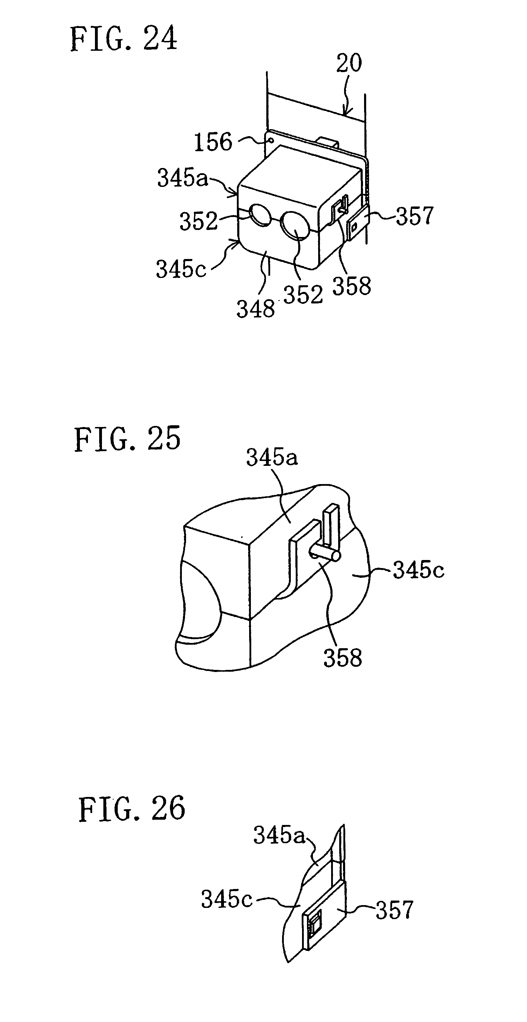

FIG. **23** through FIG. **26** shows further another embodiment of the present invention. In the present embodiment, the cooling pipe **40** extends through an opening **352** formed at a cover portion **348** of a cover **345**. The cover **345** comprises two upper and lower covers, a first cover **345a** and a second cover **345c**, that are split as shown in the figures. The first cover **345a** is fastened to the case **20** by screw **156,** and the second cover **345c** are locked to the first cover **345a** by a hook **357.** Further, a positioning pin **358** disposed between the both covers provides a secure connection between the both covers **345a, 345c** though their recess and rib. Accordingly, in the present embodiment, the second cover **345c** can be removed by just putting it down and therefore easy operation in a small space is achieved.

While the embodiments described above comprises the evaporator **30** disposed extending in the perpendicular direction and the heater core **31** placed behind the evaporator, alternative embodiments of the present invention can be provided in which the evaporator is disposed extending in the horizontal direction and the heater core is placed over the evaporator.

Further, the embodiment described above comprises the opening **25** at the left-side wall **20b** of the unit **4** for installing/removing the evaporator **30,** alternative embodiments of the present invention can be provided in which the opening is not provided if independent removal or installment of the evaporator is not needed.

Further, the embodiment described above comprises the air conditioning unit consisting of two left and right cases, alternative embodiments of the present invention can be provided in which the unit is divided into two upper and lower pieces and further the upper case divided into two upper-left and upper-right pieces. In this alternative embodiments having three unit pieces, it may be easier to deal with drain water because no partition exists at the lower piece and therefore there may be no leakage of condensed vapor water there.

Further, other connection manner of the first and second covers can be applied. For example, the rib and groove may be applied conversely. Packing may be applied between them for stable connection. While one of the first and second covers is fastened to the air conditioning case by screw and the other of them is attached to the one by hook, the both covers may be fastened to the case by screw to maintain a secure installment. To the contrary, the both covers may be attached to the case by hook or the like resulting in one action installment.

Further, the embodiment described above comprises the opening of the cooling pipe that is formed on the upper surface of the cover or the cover, alternative embodiments of the present invention can be provided in which the opening is formed at the front side of the vehicle. Further, one of the opening of the cooling pipe is formed at the cover and the other thereof is formed at the front side of the vehicle, respectively. In this case, separate structure like the embodiment 4 may be applied.

## Claims

1. An air conditioner for a vehicle, comprising:
an air conditioning unit (4) disposed substantially at the center of an instrument panel (2) of the vehicle;
a blower unit (3) disposed at passenger-seat side of said air conditioning unit and coupled to said air conditioning unit;
a heat exchanger for cooling air (30) and a heat exchanger for warming air (31) that are disposed in an air conditioning case (20) of said air conditioning unit, wherein air introduced into the air conditioning unit from said blower unit is conditioned thorough said heat exchanger for cooling air and said heat exchanger for warming air; and
an expansion valve block (33) connected to said heat exchanger for cooling air and coupled to a refrigerant pipe (40), wherein the expansion valve block is disposed at a side wall (20a) of said air conditioning case that is located at driver-seat side.

2. The air conditioner for a vehicle of Claim 1, further comprising:
a connecting block (39) connecting an inlet/outlet for refrigerant provided at the heat exchanger for cooling air and said expansion valve block, the connecting block disposed at a side of the heat exchanger for cooling air that is located at driver-seat side in such a manner that the connecting block faces to outside from said side wall (20a) of the air conditioning case that is located at driver-seat side,
wherein said expansion valve block is connected to said connecting block in such a manner that at least a part of the expansion valve block is projected from the side wall (20a) of the air conditioning case that is located at driver-seat side.

3. An air conditioner for a vehicle, comprising:
an air conditioning unit (4) disposed substantially at the center of an instrument panel (2) of the vehicle;
a heat exchanger for cooling air (30) and a heat exchanger for warming air (31) that are disposed in an air conditioning case (20) of said conditioning unit, wherein air introduced into the air conditioning unit is conditioned thorough said heat exchanger for cooling air and said heat exchanger for warming air;
an expansion valve block (33) connected to the heat exchanger for cooling air and coupled to a refrigerant pipe (40), wherein the expansion valve block is disposed at a side wall of said air conditioning case; and
a cover (49, 59, 145, 245, 345) enclosing said expansion valve block with its peripheral wall portion and cover portion,
wherein said cover is provided with an opening (492, 592, 152, 352), through which said refrigerant pipe passes, the cover is formed of two parts that are split at a portion of said opening into a first cover (49a, 59a, 145a, 245a, 345a) and a second cover(49c, 59c, 145c, 245c, 345c), and said peripheral wall portion of the cover is attached to said air conditioning case detachably.

4. The air conditioner for a vehicle of Claim 3, wherein said expansion valve block is disposed at a side wall (20a) of said air conditioning case that is located at driver-seat side.

5. The air conditioner for a vehicle of Claim 4, wherein said opening is formed on upper surface of the cover, said refrigerant pipe passes through the opening and extends along the side wall of the air conditioning case toward a front end portion thereof, said cover is formed of two parts that are split at a portion of said opening into a first cover and a second cover, and the first cover is located at the air conditioning case side and the second cover located at its opposite side includes the cover portion integrated thereto.

6. The air conditioner for a vehicle of Claim 4, wherein said opening (492, 152, 352) is formed at the cover portion, said refrigerant pipe passes through the opening and extends along the side wall of the air conditioning case toward a front end portion thereof, said cover is formed of two parts that are split at a portion of said opening into a first cover and a second cover, the first cover (49a, 145a, 245a, 345a) is located at upper side of the air conditioning case and the second cover (49c, 145c, 245c, 345c) is located at its lower side.

7. The air conditioner for a vehicle of Claim 4, wherein said side wall of the air conditioning case is provided with an opening (48) for said extension valve, and an inside end portion (147) of said peripheral wall portion of the cover includes an attaching portion for attaching the peripheral wall portion to the air conditioning case, and said attaching portion includes a projection (147a) inserted in said opening for the extension valve and a flange (147b) contacting around peripheral edge of said opening.

8. The air conditioner for a vehicle of Claim 4, wherein a groove (150, 250) is provided at either one of said first cover and second cover at their connecting surface, a rib (151, 250) inserted into said groove is provided at the other one of said first cover and second cover, and the second cover is moved away from the air conditioning case resulting in a disconnection of the first cover and the second cover.

9. The air conditioner for a vehicle of Claim 4, wherein said side wall of the air conditioning case is provided with an opening (48) for said extension valve, said first cover of the cover includes a first peripheral wall (245e) enclosing around said opening for the expansion valve that is formed at the air conditioning case, the second cover includes a second peripheral wall (245f) having an inside end portion thereof that attaches to an outside end portion of the first peripheral wall of the first cover, and the second cover includes the cover portion integrated thereto.

10. The air conditioner for a vehicle of Claim 9, further comprising a hook (257) connecting the first cover and the second cover.

11. The air conditioner for a vehicle of Claim 4, wherein said first cover (145a) of the cover is formed of a plate member located at a side of the air conditioning case from said opening (152) of the cover, said second cover (145c) of the cover encloses lower, both sides and upper surfaces of the expansion valve block and covers outside of said opening (152), a rib (151) is provided at either one of both side ends of said plate and an end of the second cover connected to the both side ends of the plate, a groove (150) receiving the rib is provided at the other one of the both side ends of said plate and the end of the second cover, and the second cover is slid away from the air conditioning case resulting in releasing a connection of the groove and the rib.

12. The air conditioner for a vehicle of Claim 11, wherein said groove is provided with a loose portion (153), and the second cover is moved away from the air conditioning until where said rib comes at a position of the loose portion resulting in releasing a connection of the groove and the rib.

13. An air conditioner for a vehicle, comprising:
an air conditioning unit (4) disposed substantially at the center of an instrument panel (2) of the vehicle;
a heat exchanger for cooling air (30) and a heat exchanger for warming air (31) that are disposed in an air conditioning case (20) of said conditioning unit, wherein air introduced into the air conditioning unit is conditioned thorough said heat exchanger for cooling air and said heat exchanger for warming air;
an expansion valve block (33) connected to the heat exchanger for cooling air and coupled to a refrigerant pipe (40), wherein the expansion valve block is disposed at a side wall of said air conditioning case; and
an opening (25) for installing the heat exchanger for cooling air into the air conditioning case or removing the heat exchanger for cooling air out of the air conditioning case, wherein the opening is formed at a side wall of the air conditioning case that is located at opposite side to said side wall of the air conditioning case for the expansion valve block.

14. The air conditioner for a vehicle of Claim 13, wherein said opening for installing the heat exchanger for cooling air is disposed at a side wall (20b) of said air conditioning case that is located at passenger-seat side, and said expansion valve block is disposed at a side wall (20a) of said air conditioning case that is located at driver-seat side.

15. The air conditioner for a vehicle of any of Claims 1-14, wherein said refrigerant pipe (40) extends along the side wall of the air conditioning case toward a front end portion thereof, and a bracket (21) supporting the refrigerant pipe is attached to a front end portion (20c) of the air conditioning case.

16. The air conditioner for a vehicle of any of Claims 1-14, wherein said refrigerant pipe (40) extends along the side wall of the air conditioning case toward a front end portion thereof, a bracket (21) supporting the refrigerant pipe is attached to a front end portion (20c) of the air conditioning case, the bracket is provided with an opening (44) for supporting the refrigerant pipe and is formed in such a manner that the bracket is split at a center portion of the opening into two parts, and one of said bracket (21a) is integrated to the air conditioning unit and the other bracket (21b) is attached to the air conditioning unit detachably.

17. The air conditioner for a vehicle of any of Claims 1-14, wherein said refrigerant pipe (40) extends along the side wall of the air conditioning case toward a front end portion thereof, a bracket (21) supporting the refrigerant pipe is attached to a front end portion (20c) of the air conditioning case, the bracket is provided with an opening (44) for supporting the refrigerant pipe, the opening has a bigger bore than an external diameter of the refrigerant pipe, and a detachable seal plate (42) is disposed at the bracket to hold the refrigerant pipe against the bracket.

18. The air conditioner for a vehicle of any of Claims 1-14, wherein said refrigerant pipe (40) extends along the side wall of the air conditioning case toward a front end portion thereof, a bracket (21) supporting the refrigerant pipe is attached to a front end portion (20c) of the air conditioning case, the bracket is provided with an opening (44) for supporting the refrigerant pipe and is formed in such a manner that the bracket is split at a center portion of the opening into two parts, one of said bracket (21a) is integrated to the air conditioning unit and the other bracket (21b) is attached to the air conditioning unit detachably, the opening has a bigger bore than an external diameter of the refrigerant pipe, and a detachable seal plate (42) is disposed at the bracket to hold the refrigerant pipe against the bracket.

19. The air conditioner for a vehicle of any of Claims 1-14, wherein said refrigerant pipe (40) extends along the side wall of the air conditioning case toward a front end portion thereof, a bracket (21) supporting the refrigerant pipe is attached to a front end portion (20c) of the air conditioning case, the bracket is provided with an opening (44) for supporting the refrigerant pipe, the opening has a bigger bore than an external diameter of the refrigerant pipe, a detachable seal plate (42) is disposed at the bracket to support the refrigerant pipe against the bracket, the seal plate is provided with a recess (45) having a diameter equivalent to an external diameter of the refrigerant pipe, and the seal plate is disposed detachably so that it can move in a perpendicular direction to an extending direction of the refrigerant pipe.

20. The air conditioner for a vehicle of any of Claims 1-14, wherein said refrigerant pipe (40) extends along the side wall of the air conditioning case toward a front end portion thereof, a bracket (21) supporting the refrigerant pipe is attached to a front end portion (20c) of the air conditioning case, the bracket is provided with an opening (44) for supporting the refrigerant pipe and is formed in such a manner that the bracket is split at a center portion of the opening into two parts, one of said bracket (21a) is integrated to the air conditioning unit and the other bracket (21b) is attached to the air conditioning unit detachably, the opening has a bigger bore than an external diameter of the refrigerant pipe, and a detachable seal plate (42) is disposed at the bracket to hold the refrigerant pipe against the bracket, the seal plate is provided with a recess (45) having a diameter equivalent to an external diameter of the refrigerant pipe, and the seal plate is disposed detachably so that it can move in a perpendicular direction to an extending direction of the refrigerant pipe.

21. The air conditioner for a vehicle of any of Claims 1-14, wherein an inlet/outlet of the heat exchanger for warming air is disposed at the side wall of the air conditioning case that is located at driver-seat side.

22. The air conditioner for a vehicle of any of Claims 1-14, wherein said heat exchanger for cooling air (30) is disposed extending in substantially a perpendicular direction, air introduced into the air conditioning unit flows through the heat exchanger for cooling air from a front side to a rear side of the vehicle, and said heat exchanger for warming air (31) is disposed at a rear side of the vehicle to the heat exchanger for cooling air.

23. The air conditioner for a vehicle of any of Claims 1-14, wherein said heat exchanger for cooling air (30) is disposed extending in substantially a perpendicular direction, air introduced into the air conditioning unit flows through the heat exchanger for cooling air from a front side to a rear side of the vehicle, said heat exchanger for warming air (31) is disposed at a rear side of the vehicle to the heat exchanger for cooling air, the heat exchanger for warming air is inclined in such a manner that its lower end approaches to the heat exchanger for cooling air while its upper end is away from the heat exchanger for cooling air, the air flowing through the heat exchanger for cooling air goes upward through the heat exchanger for warming air, and a mixing space (55) with a bypass air is disposed at an upper position of the heat exchanger for warming air.

24. The air conditioner for a vehicle of any of Claims 1-14, wherein said heat exchanger for cooling air (30) is disposed extending in substantially a perpendicular direction, air introduced into the air conditioning unit flows through the heat exchanger for cooling air from a front side to a rear side of the vehicle, said heat exchanger for warming air (31) is disposed at a rear side of the vehicle to the heat exchanger for cooling air, and an inlet/outlet of the heat exchanger for cooling air and an inlet/outlet of the heat exchanger for warming air are respectively disposed at the side wall of the air conditioning case that is located at driver-seat side.

## Patentansprüche

1. Klimaanlage für ein Fahrzeug, welche umfasst:
eine im Wesentlichen in der Mitte einer Instrumentenanlage (2) des Fahrzeugs angeordnete Klimaanlageneinrichtung (4);
eine auf der Beifahrersitzseite der Klimaanlageneinrichtung angeordnete und mit der Klimaanlageneinrichtung gekoppelte Gebläseeinrichtung (3);
einen Wärmetauscher für das Kühlen von Luft (30) und einen Wärmetauscher für das Erwärmen von Luft (31), welche in einem Klimaanlagengehäuse (20) der Klimaanlageneinrichtung angeordnet sind, wobei von der Gebläseeinrichtung in die Klimaanlageneinrichtung eingeleitete Luft durch den Wärmetauscher für das Kühlen von Luft und den Wärmetauscher für das Erwärmen von Luft klimatisiert wird; und
einen mit dem Wärmetauscher für das Kühlen von Luft verbundenen und mit einem Kältemittelrohr (40) gekoppelten Expansionsventilblock (33), wobei der Expansionsventilblock an einer sich auf einer Fahrersitzseite befindlichen Seitenwand (20a) des Klimaanlagengehäuses angeordnet ist.

2. Klimaanlage für ein Fahrzeug nach Anspruch 1, welche weiterhin umfasst:
einen einen am Wärmetauscher für das Kühlen von Luft vorgesehenen Einlass/Auslass für Kältemittel mit dem Expansionsventilblock verbindenden Verbindungsblock (39), welcher an einer auf der Fahrersitzseite befindlichen Seite des Wärmetauschers für das Kühlen von Luft so angeordnet ist, dass der Verbindungsblock von der sich auf der Fahrersitzseite befindlichen Seitenwand (20a) des Klimaanlagengehäuses nach außen weist,
wobei der Expansionsventilblock so mit dem Verbindungsblock verbunden ist, dass mindestens ein Teil des Expansionsventilblocks von der auf der Fahrersitzseite befindlichen Seitenwand (20a) des Klimaanlagengehäuses hervorragt.

3. Klimaanlage für ein Fahrzeug, welche umfasst:
eine im Wesentlichen in der Mitte einer Instrumentenanlage (2) des Fahrzeugs angeordnete Klimaanlageneinrichtung (4);
einen Wärmetauscher für das Kühlen von Luft (30) und einen Wärmetauscher für das Erwärmen von Luft (31), welche in einem Klimaanlagengehäuse (20) der Klimaanlageneinrichtung angeordnet sind, wobei in die Klimaanlageneinrichtung eingeleitete Luft durch den Wärmetauscher für das Kühlen von Luft und den Wärmetauscher für das Erwärmen von Luft klimatisiert wird;
einen mit dem Wärmetauscher für das Kühlen von Luft verbundenen und mit einem Kältemittelrohr (40) gekoppelten Expansionsventilblock (33), wobei der Expansionsventilblock an einer Seitenwand des Klimaanlagengehäuses angeordnet ist; und
eine den Expansionsventilblock mit ihrem Umfangswandteil und Abdeckteil einschließende Abdeckung (49, 59, 145, 245, 345),
wobei die Abdeckung mit einer Öffnung (492, 592, 152, 352) versehen ist, durch welche das Kältemittelrohr tritt, die Abdeckung aus zwei Teilen gebildet ist, die an einem Teil der Öffnung in eine erste Abdeckung (49a, 59a, 145a, 245a, 345a) und eine zweite Abdeckung (49c, 59c, 145c, 245c, 345c) unterteilt sind und der Umfangwandteil der Abdeckung lösbar an dem Klimaanlagengehäuse angebracht ist.

4. Klimaanlage für ein Fahrzeug nach Anspruch 3, **dadurch gekennzeichnet, dass** der Expansionsventilblock an einer auf der Fahrersitzseite befindlichen Seitenwand (20a) des Klimaanlagengehäuses angeordnet ist.

5. Klimaanlage für ein Fahrzeug nach Anspruch 4, **dadurch gekennzeichnet, dass** die Öffnung an einer oberen Oberfläche der Abdeckung ausgebildet ist, das Kältemittelrohr durch die Öffnung tritt und sich entlang der Seitenwand des Klimaanlagengehäuses hin zu einem vorderen Endteil desselben erstreckt, die Abdeckung aus zwei Teilen gebildet ist, die an einem Teil der Öffnung in eine erste Abdeckung und eine zweite Abdeckung unterteilt sind und sich die erste Abdeckung an der Klimaanlagengehäuseseite befindet und die an ihrer gegenüberliegenden Seite befindliche zweite Abdeckung den daran integrierten Abdeckteil umfasst.

6. Klimaanlage für ein Fahrzeug nach Anspruch 4, **dadurch gekennzeichnet, dass** die Öffnung (492, 152, 352) an dem Abdeckteil ausgebildet ist, das Kältemittelrohr durch die Öffnung tritt und sich entlang der Seitenwand des Klimaanlagengehäuses hin zu einem vorderen Endteil desselben erstreckt, die Abdeckung aus zwei Teilen gebildet ist, die an einem Teil der Öffnung in eine erste Abdeckung und eine zweite Abdeckung unterteilt sind, sich die erste Abdeckung (49a, 145a, 245a, 345a) an einer oberen Seite des Klimaanlagengehäuses befindet und sich die zweite Abdeckung (49c, 145c, 245c, 345c) an dessen unterer Seite befindet.

7. Klimaanlage für ein Fahrzeug nach Anspruch 4, **dadurch gekennzeichnet, dass** die Seitenwand des Klimaanlagengehäuses mit einer Öffnung (48) für das Expansionsventil versehen ist und ein innerer Endteil (147) des Umfangswandteils der Abdeckung einen Befestigungsteil für das Befestigen des Umfangswandteils an dem Klimaanlagengehäuse umfasst und der Befestigungsteil einen in die Öffnung für das Expansionsventil eingeführten Vorsprung (147a) und einen um die Umfangskante der Öffnung anliegenden Flansch (147b) umfasst.

8. Klimaanlage für ein Fahrzeug nach Anspruch 4, **dadurch gekennzeichnet, dass** eine Nut (150, 250) an einer von erster Abdeckung und zweiter Abdeckung an deren Verbindungsfläche vorgesehen ist, eine in die Nut eingeführte Rippe (151, 250) an der anderen von erster Abdeckung und zweiter Abdeckung vorgesehen ist und die zweite Abdeckung von dem Klimaanlagengehäuse wegbewegt wird, was zu einer Trennung der ersten Abdeckung und der zweiten Abdeckung führt.

9. Klimaanlage für ein Fahrzeug nach Anspruch 4, **dadurch gekennzeichnet, dass** die Seitenwand des Klimaanlagengehäuses mit einer Öffnung (48) für das Expansionsventil versehen ist, die erste Abdeckung der Abdeckung eine erste Umfangswand (245e) umfasst, welche die an dem Klimaanlagengehäuse ausgebildete Öffnung für das Expansionsventil umschließt, die zweite Abdeckung eine zweite Umfangswand (245f) umfasst, welche einen inneren Endteil derselben aufweist, der an einem äußeren Endteil der ersten Umfangswand der ersten Abdeckung befestigt ist, und die zweite Abdeckung den daran integrierten Abdeckteil umfasst.

10. Klimaanlage für ein Fahrzeug nach Anspruch 9, welche weiterhin einen die erste Abdeckung und die zweite Abdeckung verbindenden Haken (257) umfasst.

11. Klimaanlage für ein Fahrzeug nach Anspruch 4, **dadurch gekennzeichnet, dass** die erste Abdeckung (145a) der Abdeckung aus einem an einer Seite des Klimaanlagengehäuses befindlichen Plattenelement von der Öffnung (152) der Abdeckung gebildet ist, die zweite Abdeckung (145c) der Abdeckung die untere, beide Seitenflächen und die obere Fläche des Expansionsventilblocks umschließt und außerhalb der Öffnung (152) abdeckt, eine Rippe (151) an einem der beiden Seitenenden der Platte und einem Ende der zweiten Abdeckung, welche mit den beiden Seitenenden der Platte verbunden ist, vorgesehen ist, eine die Rippe aufnehmende Nut (150) an dem anderen der beiden Seitenenden der Platte und dem Ende der zweiten Abdeckung vorgesehen ist und die zweite Abdeckung von dem Klimaanlagengehäuse weg geschoben wird, was zu einem Lösen einer Verbindung der Nut und der Rippe führt.

12. Klimaanlage für ein Fahrzeug nach Anspruch 11, **dadurch gekennzeichnet, dass** die Nut mit einem losen Teil (153) versehen ist und die zweite Abdeckung von der Klimaanlage wegbewegt wird, bis die Rippe eine Position des losen Teils erreicht, was zu einem Lösen einer Verbindung der Nut und der Rippe führt.

13. Klimaanlage für ein Fahrzeug, welche umfasst:
eine im Wesentlichen in der Mitte einer Instrumentenanlage (2) des Fahrzeugs angeordnete Klimaanlageneinrichtung (4);
einen Wärmetauscher für das Kühlen von Luft (30) und einen Wärmetauscher für das Erwärmen von Luft (31 ), welche in einem Klimaanlagengehäuse (20) der Klimaanlageneinrichtung angeordnet sind, wobei in die Klimaanlageneinrichtung eingeleitete Luft durch den Wärmetauscher für das Kühlen von Luft und den Wärmetauscher für das Erwärmen von Luft klimatisiert wird;
einen mit dem Wärmetauscher für das Kühlen von Luft verbundenen und mit einem Kältemittelrohr (40) gekoppelten Expansionsventilblock (33), wobei der Expansionsventilblock an einer Seitenwand des Klimaanlagengehäuses angeordnet ist; und
eine Öffnung (25) für das Einbauen des Wärmetauschers für das Kühlen von Luft in das Klimaanlagengehäuse oder für das Entnehmen des Wärmetauschers für das Kühlen von Luft aus dem Klimaanlagengehäuse, wobei die Öffnung an einer Seitenwand des Klimaanlagengehäuses ausgebildet ist, welche sich an der der Seitenwand des Klimaanlagengehäuses für den Expansionsventilblock gegenüberliegenden Seite befindet.

14. Klimaanlage für ein Fahrzeug nach Anspruch 13, **dadurch gekennzeichnet, dass** die Öffnung für das Einbauen des Wärmetauschers für das Kühlen von Luft an einer Seitenwand (20b) des Klimaanlagengehäuses angeordnet ist, welche sich auf der Beifahrersitzseite befindet, und der Expansionsventilblock an einer Seitenwand (20a) des Klimaanlagengehäuses angeordnet ist, welche sich auf der Fahrersitzseite befindet.

15. Klimaanlage für ein Fahrzeug nach einem der Ansprüche 1 - 14, **dadurch gekennzeichnet, dass** sich das Kältemittelrohr (40) entlang der Seitenwand des Klimaanlagengehäuses hin zu einem vorderen Endteil desselben erstreckt und eine das Kältemittelrohr lagernde Halterung (21) an einem vorderen Endteil (20c) des Klimaanlagengehäuses angebracht ist.

16. Klimaanlage für ein Fahrzeug nach einem der Ansprüche 1 - 14, **dadurch gekennzeichnet, dass** sich das Kältemittelrohr (40) entlang der Seitenwand des Klimaanlagengehäuses hin zu einem vorderen Endteil desselben erstreckt, eine das Kältemittelrohr lagernde Halterung (21) an einem vorderen Endteil (20c) des Klimaanlagengehäuses angebracht ist, die Halterung mit einer Öffnung (44) für das Lagern des Kältemittelrohrs versehen und so ausgebildet ist, dass die Halterung an einem mittigen Teil der Öffnung in zwei Teile unterteilt ist, und eine besagte Halterung (21 a) an der Klimaanlageneinrichtung integriert ist und die andere Halterung (21 b) lösbar an der Klimaanlageneinrichtung angebracht ist.

17. Klimaanlage für ein Fahrzeug nach einem der Ansprüche 1 - 14, **dadurch gekennzeichnet, dass** sich das Kältemittelrohr (40) entlang der Seitenwand des Klimaanlagengehäuses hin zu einem vorderen Endteil desselben erstreckt, eine das Kältemittelrohr lagernde Halterung (21) an einem vorderen Endteil (20c) des Klimaanlagengehäuses angebracht ist, die Halterung mit einer Öffnung (44) für das Lagern des Kältemittelrohrs versehen ist, die Öffnung eine Bohrung größer als ein Außendurchmesser des Kältemittelrohrs aufweist und eine abnehmbare Abdichtplatte (42) an der Halterung angeordnet ist, um das Kältemittelrohr gegen die Halterung zu halten.

18. Klimaanlage für ein Fahrzeug nach einem der Ansprüche 1 - 14, **dadurch gekennzeichnet, dass** sich das Kältemittelrohr (40) entlang der Seitenwand des Klimaanlagengehäuses hin zu einem vorderen Endteil desselben erstreckt, eine das Kältemittelrohr lagernde Halterung (21) an einem vorderen Endteil (20c) des Klimaanlagengehäuses angebracht ist, die Halterung mit einer Öffnung (44) für das Lagern des Kältemittelrohrs versehen und so ausgebildet ist, dass die Halterung an einem mittigen Teil der Öffnung in zwei Teile unterteilt ist, eine besagte Halterung (21 a) an der Klimaanlageneinrichtung integriert ist und die andere Halterung (21 b) lösbar an der Klimaanlageneinrichtung angebracht ist, die Öffnung eine Bohrung größer als ein Außendurchmesser des Kältemittelrohrs aufweist und eine abnehmbare Abdichtplatte (42) an der Halterung angeordnet ist, um das Kältemittelrohr gegen die Halterung zu halten.

19. Klimaanlage für ein Fahrzeug nach einem der Ansprüche 1 - 14, **dadurch gekennzeichnet, dass** sich das Kältemittelrohr (40) entlang der Seitenwand des Klimaanlagengehäuses hin zu einem vorderen Endteil desselben erstreckt, eine das Kältemittelrohr lagernde Halterung (21) an einem vorderen Endteil (20c) des Klimaanlagengehäuses angebracht ist, die Halterung mit einer Öffnung (44) für das Lagern des Kältemittelrohrs versehen ist, die Öffnung eine Bohrung größer als ein Außendurchmesser des Kältemittelrohrs aufweist, eine abnehmbare Abdichtplatte (42) an der Halterung angeordnet ist, um das Kältemittelrohr gegen die Halterung zu halten, die Abdichtplatte mit einer Aussparung (45) mit einem Durchmesser gleich einem Außendurchmesser des Kältemittelrohrs versehen ist und die Abdichtplatte abnehmbar angeordnet ist, so dass sie sich in einer Richtung senkrecht zu einer Verlaufsrichtung des Kältemittelrohrs bewegen kann.

20. Klimaanlage für ein Fahrzeug nach einem der Ansprüche 1 - 14, **dadurch gekennzeichnet, dass** sich das Kältemittelrohr (40) entlang der Seitenwand des Klimaanlagengehäuses hin zu einem vorderen Endteil desselben erstreckt, eine das Kältemittelrohr lagernde Halterung (21) an einem vorderen Endteil (20c) des Klimaanlagengehäuses angebracht ist, die Halterung mit einer Öffnung (44) für das Lagern des Kältemittelrohrs versehen und so ausgebildet ist, dass die Halterung an einem mittigen Teil der Öffnung in zwei Teile unterteilt ist, eine besagte Halterung (21a) an der Klimaanlageneinrichtung integriert ist und die andere Halterung (21b) lösbar an der Klimaanlageneinrichtung angebracht ist, die Öffnung eine Bohrung größer als ein Außendurchmesser des Kältemittelrohrs aufweist und eine abnehmbare Abdichtplatte (42) an der Halterung angeordnet ist, um das Kältemittelrohr gegen die Halterung zu halten, die Abdichtplatte mit einer Aussparung (45) mit einem Durchmesser gleich einem Außendurchmesser des Kältemittelrohrs versehen ist und die Abdichtplatte abnehmbar angeordnet ist, so dass sie sich in einer Richtung senkrecht zu einer Verlaufsrichtung des Kältemittelrohrs bewegen kann.

21. Klimaanlage für ein Fahrzeug nach einem der Ansprüche 1 - 14, **dadurch gekennzeichnet, dass** ein Einlass/Auslass des Wärmetauschers für das Erwärmen von Luft an der auf der Fahrersitzseite befindlichen Seitenwand des Klimaanlagengehäuses angeordnet ist.

22. Klimaanlage für ein Fahrzeug nach einem der Ansprüche 1 - 14, **dadurch gekennzeichnet, dass** der Wärmetauscher für das Kühlen von Luft (30) sich im Wesentlichen in einer senkrechten Richtung erstreckend angeordnet ist, in die Klimaanlageneinrichtung eingeleitete Luft von einer Vorderseite zu einer Hinterseite des Fahrzeugs durch den Wärmetauscher für das Kühlen von Luft strömt und der Wärmetauscher für das Erwärmen von Luft (31) an einer Hinterseite des Fahrzugs zum Wärmetauscher für das Kühlen von Luft angeordnet ist.

23. Klimaanlage für ein Fahrzeug nach einem der Ansprüche 1 - 14, **dadurch gekennzeichnet, dass** der Wärmetauscher für das Kühlen von Luft (30) sich im Wesentlichen in einer senkrechten Richtung erstreckend angeordnet ist, in die Klimaanlageneinrichtung eingeleitete Luft von einer Vorderseite zu einer Hinterseite des Fahrzeugs durch den Wärmetauscher für das Kühlen von Luft strömt, der Wärmetauscher für das Erwärmen von Luft (31) an einer Hinterseite des Fahrzeugs zum Wärmetauscher für das Kühlen von Luft angeordnet ist, der Wärmetauscher für das Erwärmen von Luft so geneigt ist, dass sich sein unteres Ende dem Wärmetauscher für das Kühlen von Luft nähert, während sein oberes Ende weg vom Wärmetauscher für das Kühlen von Luft ist, die durch den Wärmetauscher für das Kühlen von Luft strömende Luft durch den Wärmetauscher für das Erwärmen von Luft nach oben geht und ein Mischraum (55) mit einer Bypass-Luft an einer oberen Position des Wärmetauschers für das Erwärmen von Luft angeordnet ist.

24. Klimaanlage für ein Fahrzeug nach einem der Ansprüche 1 - 14, **dadurch gekennzeichnet, dass** der Wärmetauscher für das Kühlen von Luft (30) sich im Wesentlichen in einer senkrechten Richtung erstreckend angeordnet ist, in die Klimaanlageneinrichtung eingeleitete Luft von einer Vorderseite zu einer Hinterseite des Fahrzeugs durch den Wärmetauscher für das Kühlen von Luft strömt, der Wärmetauscher für das Erwärmen von Luft (31) an einer Hinterseite des Fahrzeugs zum Wärmetauscher für das Kühlen von Luft angeordnet ist und ein Einlass/Auslass des Wärmetauschers für das Kühlen von Luft und ein Einlass/Auslass des Wärmetauschers für das Erwärmen von Luft jeweils an der auf der Fahrersitzseite befindlichen Seitenwand des Klimaanlagengehäuses angeordnet sind.

## Revendications

1. Climatisation pour véhicule, comprenant :
une unité de climatisation (4) disposée substantiellement au centre d'un tableau de bord (2) du véhicule ;
une unité de soufflerie (3) disposée du côté siège passager de ladite unité de climatisation et accouplée à ladite unité de climatisation ;
un échangeur thermique pour refroidir l'air (30) et un échangeur thermique pour réchauffer l'air (31) qui sont disposés dans un carter de climatisation (20) de ladite unité de climatisation, dans lesquels l'air introduit dans l'unité de climatisation depuis ladite unité de soufflerie est conditionné à travers ledit échangeur thermique pour refroidir l'air et ledit échangeur thermique pour réchauffer l'air ; et
un bloc détendeur (33) connecté audit échangeur thermique pour refroidir l'air et accouplé à un tuyau de frigorigène (40), dans lequel le bloc détendeur est disposé sur une paroi latérale (20a) dudit carter de climatisation qui est situé du côté siège conducteur.

2. Climatisation pour véhicule selon la revendication 1, comprenant en outre :
un bloc de raccordement (39) connectant une entrée/sortie de frigorigène prévue à l'échangeur thermique pour refroidir l'air et audit bloc détendeur, le bloc de raccordement disposé sur un côté de l'échangeur thermique pour refroidir l'air qui est situé du côté siège conducteur de telle manière que le bloc de raccordement fait face à l'extérieur à partir de ladite paroi latérale (20a) du carter de climatisation qui est situé du côté siège conducteur,
dans laquelle ledit bloc détendeur est connecté audit bloc de raccordement de telle manière qu'au moins une partie du bloc détendeur s'étend de la paroi latérale (20a) du carter de climatisation qui est située du côté siège conducteur.

3. Climatisation pour véhicule, comprenant :
une unité de climatisation (4) disposée substantiellement au centre d'un tableau de bord (2) du véhicule ;
un échangeur thermique pour refroidir l'air (30) et un échangeur thermique pour réchauffer l'air (31) qui sont disposés dans un carter de climatisation (20) de ladite unité de climatisation, dans lesquels l'air introduit dans l'unité de climatisation est conditionné à travers ledit échangeur thermique pour refroidir l'air et ledit échangeur thermique pour réchauffer l'air ;
un bloc détendeur (33) connecté à l'échangeur thermique pour refroidir l'air et accouplé à un tuyau de frigorigène (40), dans lequel le bloc détendeur est disposé sur une paroi latérale dudit carter de climatisation ; et
un capot (49, 59, 145, 245, 345) enfermant ledit bloc détendeur avec sa partie de paroi périphérique et sa partie de capot,
dans laquelle ledit capot est pourvu d'une ouverture (492, 592, 152, 352), à travers laquelle passe ledit tuyau de frigorigène, le capot est formé de deux parties qui sont divisées au niveau d'une partie de ladite ouverture en un premier capot (49a, 59a, 145a, 245a, 345a) et un deuxième capot (49c, 59c, 145c, 245c, 345c), et ladite partie de paroi périphérique du capot est fixée audit carter de climatisation de manière amovible.

4. Climatisation pour véhicule selon la revendication 3, dans laquelle ledit bloc détendeur est disposé sur une paroi latérale (20a) dudit carter de climatisation qui est situé du côté siège conducteur.

5. Climatisation pour véhicule selon la revendication 4, dans laquelle ladite ouverture est formée sur la surface supérieure du capot, ledit tuyau de frigorigène passe à travers l'ouverture et s'étend le long de la paroi latérale du carter de climatisation vers une partie d'extrémité avant de celui-ci, ledit capot est formé de deux parties qui sont divisées au niveau d'une partie de ladite ouverture en un premier capot et un deuxième capot, et le premier capot est situé sur le côté du carter de climatisation et le deuxième capot, situé sur le côté opposé, comporte la partie de capot qui lui est intégrée.

6. Climatisation pour véhicule selon la revendication 4, dans laquelle ladite ouverture (492, 152, 352) est formée au niveau de la partie de capot, ledit tuyau de frigorigène passe à travers l'ouverture et s'étend le long de la paroi latérale du carter de climatisation vers une partie d'extrémité avant de celui-ci, ledit capot est formé de deux parties qui sont divisées au niveau d'une partie de ladite ouverture en un premier capot et un deuxième capot, le premier capot (49a, 145a, 245a, 345a) est situé sur le côté supérieur du carter de climatisation et le deuxième capot (49c, 145c, 245c, 345c) est situé sur son côté inférieur.

7. Climatisation pour véhicule selon la revendication 4, dans laquelle ladite paroi latérale du carter de climatisation est pourvue d'une ouverture (48) pour ledit détendeur, et une partie d'extrémité intérieure (147) de ladite partie de paroi périphérique du capot comprend une partie de fixation pour fixer la partie de paroi périphérique au carter de climatisation, et ladite partie de fixation comprend une saillie (147a) insérée dans ladite ouverture pour le détendeur et une bride (147b) en contact autour du bord périphérique de ladite ouverture.

8. Climatisation pour véhicule selon la revendication 4, dans laquelle une gorge (150, 250) est prévue à l'un ou à l'autre desdits premier capot et deuxième capot au niveau de leur surface de raccordement, une nervure (151, 250) insérée dans ladite gorge est prévue dans l'autre desdits premier capot et deuxième capot, et le deuxième capot est écarté du carter de climatisation avec pour résultat la déconnexion du premier capot et du deuxième capot.

9. Climatisation pour véhicule selon la revendication 4, dans laquelle ladite paroi latérale du carter de climatisation est pourvue d'une ouverture (48) pour ledit détendeur, ledit premier capot de l'ensemble de capot comprend une première paroi périphérique (245e) enfermant ladite ouverture pour le détendeur qui est formée dans le carter de climatisation, le deuxième capot comprend une deuxième paroi périphérique (245f) ayant une partie d'extrémité intérieure qui se fixe à une partie d'extrémité extérieure de la première paroi périphérique du premier capot, et le deuxième capot comprend la partie de capot qui lui est intégrée.

10. Climatisation pour véhicule selon la revendication 9, comprenant en outre un crochet (257) connectant le premier capot et le deuxième capot.

11. Climatisation pour véhicule selon la revendication 4, dans laquelle ledit premier capot (145a) de l'ensemble de capot est formé d'un élément de plaque situé sur un côté du carter de climatisation de ladite ouverture (152) du capot, ledit deuxième capot (145c) de l'ensemble de capot enferme les surfaces inférieures, supérieures et des deux côtés du bloc détendeur et couvre l'extérieur de ladite ouverture (152), une nervure (151) est prévue à l'une ou l'autre des extrémités latérales de ladite plaque et une extrémité du deuxième capot est connectée aux deux extrémités latérales de la plaque, une gorge (150) accueillant la nervure est prévue à l'autre des deux extrémités latérales de ladite plaque et à l'extrémité du deuxième capot, et le deuxième capot est écarté par coulissement du carter de climatisation ayant pour résultat la déconnexion.de la gorge et de la nervure.

12. Climatisation pour véhicule selon la revendication 11, dans laquelle ladite gorge est pourvue d'une partie libre (153), et le deuxième capot est écarté de la climatisation jusqu'à ce que ladite nervure se trouve au niveau de la partie libre ayant pour résultat la déconnexion de la gorge et de la nervure.

13. Climatisation pour véhicule, comprenant :
une unité de climatisation (4) disposée substantiellement au centre d'un tableau de bord (2) du véhicule ;
un échangeur thermique pour refroidir l'air (30) et un échangeur thermique pour réchauffer l'air (31) qui sont disposés dans un carter de climatisation (20) de ladite unité de climatisation, dans lesquels l'air introduit dans l'unité de climatisation est conditionné à travers ledit échangeur thermique pour refroidir l'air et ledit échangeur thermique pour réchauffer l'air ;
un bloc détendeur (33) connecté à l'échangeur thermique pour refroidir l'air et accouplé à un tuyau de frigorigène (40), dans lequel le bloc détendeur est disposé sur une paroi latérale dudit carter de climatisation ; et
une ouverture (25) pour installer l'échangeur thermique pour refroidir l'air dans le carter de climatisation ou pour retirer l'échangeur thermique pour refroidir l'air du carter de climatisation, dans laquelle l'ouverture est formée dans une paroi latérale du carter de climatisation qui est située sur le côté opposé de ladite paroi latérale du carter de climatisation pour le bloc détendeur.

14. Climatisation pour véhicule selon la revendication 13, dans laquelle ladite ouverture pour installer l'échangeur thermique pour refroidir l'air est disposée sur une paroi latérale (20b) dudit carter de climatisation qui est située du côté siège passager, et ledit bloc détendeur est disposé sur une paroi latérale (20a) dudit carter de climatisation qui est située du côté siège conducteur.

15. Climatisation pour véhicule selon l'une quelconque des revendications 1-14, dans laquelle ledit tuyau de frigorigène (40) s'étend le long de la paroi latérale du carter de climatisation vers une partie d'extrémité avant de celui-ci, et un support (21) supportant le tuyau de frigorigène est fixé à une partie d'extrémité avant (20c) du carter de climatisation.

16. Climatisation pour véhicule selon l'une quelconque des revendications 1-14, dans laquelle ledit tuyau de frigorigène (40) s'étend le long de la paroi latérale du carter de climatisation vers une partie d'extrémité avant de celui-ci, un support (21) supportant le tuyau de frigorigène est fixé à une partie d'extrémité avant (20c) du carter de climatisation, le support est pourvu d'une ouverture (44) pour supporter le tuyau de frigorigène et est formé de telle manière que le support est divisé au niveau d'une partie centrale de l'ouverture en deux parties, et un desdits supports (21a) est intégré à l'unité de climatisation et l'autre support (21b) est fixé de manière amovible à l'unité de climatisation.

17. Climatisation pour véhicule selon l'une quelconque des revendications 1-14, dans laquelle ledit tuyau de frigorigène (40) s'étend le long de la paroi latérale du carter de climatisation vers une partie d'extrémité avant de celui-ci, un support (21) supportant le tuyau de frigorigène est fixé à une partie d'extrémité avant (20c) du carter de climatisation, le support est pourvu d'une ouverture (44) pour supporter le tuyau de frigorigène, l'ouverture a un alésage plus grand que le diamètre externe du tuyau de frigorigène, et une plaque d'étanchéité amovible (42) est disposée au niveau du support pour maintenir le tuyau de frigorigène contre le support.

18. Climatisation pour véhicule selon l'une quelconque des revendications 1-14, dans laquelle ledit tuyau de frigorigène (40) s'étend le long de la paroi latérale du carter de climatisation vers une partie d'extrémité avant de celui-ci, un support (21) supportant le tuyau de frigorigène est fixé à une partie d'extrémité avant (20c) du carter de climatisation, le support est pourvu d'une ouverture (44) pour supporter le tuyau de frigorigène et est formé de telle manière que le support est divisé au niveau d'une partie centrale de l'ouverture en deux parties, un desdits supports (21a) est intégré à l'unité de climatisation et l'autre support (21b) est fixé de manière amovible à l'unité de climatisation, l'ouverture a un alésage plus grand que le diamètre externe du tuyau de frigorigène, et une plaque d'étanchéité amovible (42) est disposée au niveau du support pour maintenir le tuyau de frigorigène contre le support.

19. Climatisation pour véhicule selon l'une quelconque des revendications 1-14, dans laquelle ledit tuyau de frigorigène (40) s'étend le long de la paroi latérale du carter de climatisation vers une partie d'extrémité avant de celui-ci, un support (21) supportant le tuyau de frigorigène est fixé à une partie d'extrémité avant (20c) du carter de climatisation, le support est pourvu d'une ouverture (44) pour supporter le tuyau de frigorigène, l'ouverture a un alésage plus grand que le diamètre externe du tuyau de frigorigène, une plaque d'étanchéité amovible (42) est disposée au niveau du support pour supporter le tuyau de frigorigène contre le support, la plaque d'étanchéité est pourvue d'une découpe (45) ayant un diamètre équivalent au diamètre externe du tuyau de frigorigène, et la plaque d'étanchéité est disposée de manière amovible de telle manière qu'elle peut se déplacer dans le sens perpendiculaire dans une direction d'extension du tuyau de frigorigène.

20. Climatisation pour véhicule selon l'une quelconque des revendications 1-14, dans laquelle ledit tuyau de frigorigène (40) s'étend le long de la paroi latérale du carter de climatisation vers une partie d'extrémité avant de celui-ci, un support (21) supportant le tuyau de frigorigène est fixé à une partie d'extrémité avant (20c) du carter de climatisation, le support est pourvu d'une ouverture (44) pour supporter le tuyau de frigorigène et est formé de telle manière que le support est divisé au niveau d'une partie centrale de l'ouverture en deux parties, un desdits supports (21a) est intégré à l'unité de climatisation et l'autre support (21b) est fixé de manière amovible à l'unité de climatisation, l'ouverture a un alésage plus grand que le diamètre externe du tuyau de frigorigène, et une plaque d'étanchéité amovible (42) est disposée au niveau du support pour maintenir le tuyau de frigorigène contre le support, la plaque d'étanchéité est pourvue d'une découpe (45) ayant un diamètre équivalent au diamètre externe du tuyau de frigorigène, et la plaque d'étanchéité est disposée de manière amovible de telle manière qu'elle peut se déplacer dans le sens perpendiculaire dans une direction d'extension du tuyau de frigorigène

21. Climatisation pour véhicule selon l'une quelconque des revendications 1-14, dans laquelle une entrée/sortie de l'échangeur thermique pour réchauffer l'air est disposée sur la partie latérale du carter de climatisation qui est située du côté siège conducteur.

22. Climatisation pour véhicule selon l'une quelconque des revendications 1-14, dans laquelle ledit échangeur thermique pour refroidir l'air (30) est disposé de manière à s'étendre dans une direction substantiellement perpendiculaire, l'air introduit dans l'unité de climatisation circule à travers l'échangeur thermique pour refroidir l'air d'un côté avant à un côté arrière du véhicule, et ledit échangeur thermique pour réchauffer l'air (31) est disposé sur un côté arrière du véhicule par rapport à l'échangeur thermique pour refroidir l'air.

23. Climatisation pour véhicule selon l'une quelconque des revendications 1-14, dans laquelle ledit échangeur thermique pour refroidir l'air (30) est disposé de manière à s'étendre dans une direction substantiellement perpendiculaire, l'air introduit dans l'unité de climatisation circule à travers l'échangeur thermique pour refroidir l'air d'un côté avant à un côté arrière du véhicule, ledit échangeur thermique pour réchauffer l'air (31) est disposé sur un côté arrière du véhicule par rapport à l'échangeur thermique pour refroidir l'air, l'échangeur thermique pour réchauffer l'air est incliné de telle manière que son extrémité inférieure approche l'échangeur thermique pour refroidir l'air alors que son extrémité supérieure s'écarte de l'échangeur thermique pour refroidir l'air, l'air circulant à travers l'échangeur thermique pour refroidir l'air se dirige vers le haut à travers l'échangeur thermique pour réchauffer l'air, et un espace de mélange (55) avec de l'air de dérivation est disposé à une position supérieure de l'échangeur thermique pour réchauffer l'air.

24. Climatisation pour véhicule selon l'une quelconque des revendications 1-14, dans laquelle ledit échangeur thermique pour refroidir l'air (30) est disposé de manière à s'étendre dans une direction substantiellement perpendiculaire, l'air introduit dans l'unité de climatisation circule à travers l'échangeur thermique pour refroidir l'air d'un côté avant à un côté arrière du véhicule, ledit échangeur thermique pour réchauffer l'air (31) est disposé sur un côté arrière du véhicule par rapport à l'échangeur thermique pour refroidir l'air, et une entrée/sortie de l'échangeur thermique pour refroidir l'air et une entrée/sortie de l'échangeur thermique pour réchauffer l'air sont disposées respectivement sur la paroi latérale du carter de climatisation qui est située du côté siège conducteur.
